# EUROPEAN PATENT SPECIFICATION

(11) **EP 1 720 945 B1**
(45) Date of publication and mention of the grant of the patent: **16.03.2016**
(21) Application number: 04813231.0
(22) Date of filing: 06.12.2004
(51) Int. Cl.: C09B 23/06, G01N 33/58

(54) **METHINE-SUBSTITUTED CYANINE DYE COMPOUNDS**
METHINSUBSTITUIERTE CYANINFARBSTOFFVERBINDUNGEN
COLORANTS DE CYANINE A SUBSTITUTION DE METHINE

(30) Priority: 05.12.2003 US 527234 P; 18.03.2004 US 554452 P
(43) Date of publication of application: 15.11.2006
(60) Divisional application: 13161164.2
(73) Proprietor: Life Technologies Corporation, Carlsbad, CA 92008 (US)
(72) Inventor: DALWIG, Jason, Molecular Probes Inc., Eugene, OR 97402 (US); HAGEN, David, Molecular Probes Inc., Eugene, OR 97402 (US); Huang, Timothy, Molecular Probes Inc., Eugene, OR 97402 (US); THOMAS, Jerry, Molecular Probes Inc., Eugene, OR 97402 (US); YUE, Stephen, Molecular Probes Inc., Eugene, OR 97402 (US)
(74) Representative: Selby, David Sean
(86) International application number: PCT/US2004/040886
(87) International publication number: WO 2005/056687

(56) References cited:
- EP-A- 0 805 376
- EP-A- 0 985 964
- WO-A-00/66664
- US-A- 5 578 439
- US-A- 6 153 370

## Description

### INTRODUCTION

### Field of the Invention

The present invention relates to cyanine compounds useful for staining nucleic acids, including RNA. The invention has applications in the fields of molecular biology, particularly with respect to fluorescence-based assays.

### Background of the Invention

In selected fields of life sciences research, including for example biological, biomedical, genetic, fermentation, aquaculture, agricultural, forensic and environmental research, there may often occur the need to identify nucleic acids, qualitatively and quantitatively, in pure solutions and in biological samples. Such applications may benefit from fast, sensitive, and selective methodologies for detecting and/or quantifying nucleic acids of interest.

WO 00/66664 discloses unsymmetrical cyanine dyes that incorporate an aza-benzazolium ring moiety, including cyanine dyes substituted by a cationic side chain, monomeric and dimeric cyanine dyes, chemically reactive cyanine dyes, and conjugates of cyanine dyes. The dyes of WO 00/66664 are virtually non-fluorescent when diluted in aqueous solution, but exhibit bright fluorescence when associated with nucleic acid polymers such as DNA or RNA, or when associated with detergent-complexed proteins. A variety of applications are described in WO 00/66664 for detection and quantitation of nucleic acids and detergent-complexed proteins in a variety of samples, including solutions, electrophoretic gels, cells, and microorganisms.

EP0985964 describes photographic material having enhanced light absorption. The photographic material comprises a silver halide photographic material comprising at least one silver halide emulsion comprising tabular silver halide grains having associated therewith at least two dye layers comprising (a) an inner dye layer adjacent to the silver halide grain and comprising at least one dye that is capable of spectrally sensitizing silver halide and (b) an outer dye layer adjacent to the inner dye layer and comprising at least one dye. A number of the dyes that are disclosed comprise two substituted benzothiazole structures.

US 6153370 discloses a light-sensitive silver halide photographic emulsion, which comprises light-sensitive silver halide grains mainly composed of (100) planes and (111) planes, at least one compound that is adsorbed selectively on the (100) planes of the silver halide grains, and at least one spectrally sensitizing dye. A number of the dyes that are disclosed comprise at least one substituted benzothiazole structure.

EP 0805376 discloses photothermographic material comprising an organic silver salt, a silver halide, and a reducing agent, a hydrazine compound of a specified structure and a sensitizing dye of a specified structure. A number of the sensitizing dyes that are disclosed comprise two substituted benzothiazole structures connected by a linker.

US 5578439 describes a silver halide photographic material, which contains a methane compound represented by a specified formula. A number of the methine compounds comprise two substituted benzothiazole structures.

In particular, it may be helpful in some research venues to provide molecular species that at least somewhat selectively stain RNA even in the presence of DNA. That is, the probe or reagent may permit the researcher to distinguish RNA present in a sample from DNA in the same sample.

### SUMMARY

The present invention relates to nucleic acid reporter compounds, which are cyanine dyes that comprise a substituted methine bridge and a quinolinium moiety. These reporter compounds find use as nucleic acid stains, particularly for the fluorescent detection/quantitation of DNA.

The compounds of the invention have the formula: 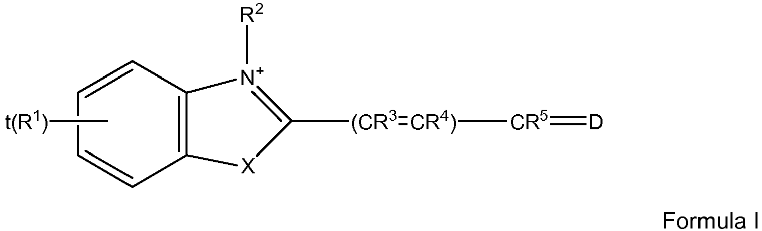 wherein t is an integer from 1 to 4, R² is an alkyl, X is S, each R¹ is H, R³ and R⁵ are hydrogen, R⁴ is a substituted phenyl moiety, and D is a substituted quinolinium moiety.

These nucleic acid reporter molecules exhibit a fluorescence enhancement when non-covalently associated with a nucleic acid molecule. In one aspect, the fluorescence enhancement is greater when the nucleic acid is RNA than when the nucleic acid is DNA. In another aspect, the fluorescence enhancement is greater when the nucleic acid is DNA than when the nucleic acid is RNA.

In an exemplary embodiment of the kits, the nucleic acid reporter molecule has the formula:

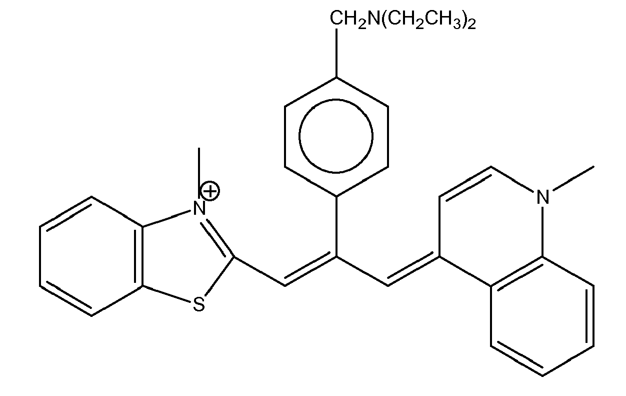

Additional embodiments of the present invention provide methods of detecting the presence or absence of nucleic acid, including a method for detecting the presence or absence of RNA in the presence of DNA. The present methods comprise:
a. combining a present nucleic acid reporter molecule that is a compound of the invention with the sample to prepare a labeling mixture;
b. incubating the labeling mixture for a sufficient amount of time for the nucleic acid reporter molecule to associate with nucleic acid in the sample to form an incubated mixture;
c. illuminating the incubated sample with an appropriate wavelength to form an illuminated mixture; and,
d. observing the illuminated mixture whereby the presence or absence of the nucleic acid in a sample is detected.

In one aspect, the nucleic acid reporter molecule has a RNA/DNA ratio of fluorescence enhancement greater than about one.

Also provided is a staining solution comprising a present nucleic acid reporter molecule that is a compound of the invention and a detergent. The detergent is typically present in an aqueous solution at a concentration from about .0001% to about 0.05%. Detergents include CHAPS (3-[(3-cholamidopropyl)dimethylammonio]-1-propane sulfonate), Triton^{™}-X, SDS (sodium dodecyl sulfate) and Tween^{®} 20. In a further aspect, the staining solution contains a low concentration of DNA, a low concentration being about 0.1 µg/ml to about 0.5 µg/ml.

Further embodiments provide complexes of compounds of the present invention non-covalently associated with nucleic acid molecule and compositions comprising a compound of the present invention and a sample. In one aspect the sample comprises biological fluids, buffer solutions, live cells, fixed cells, eukaryotic cells, prokaryotic cells, nucleic acid polymers, nucleotides, nucleosides, a polymeric gel or tissue sections. In a further aspect the sample is present in an aqueous solution, in or on a microarray or a microwell plate. Additional embodiments of the present invention provide kits for the detection of nucleic acid, wherein the kit comprises any compound of the present invention. In a further embodiment, the kits comprise instructions for the detection of nucleic acid, particularly instructions for the detection of RNA in the presence of DNA. In yet another further embodiment, the kits comprises at least one component that is a sample preparation reagent, a buffering agent, an organic solvent, an aqueous nucleic acid reporter molecule dilution buffer, nucleic acid control, or an additional detection reagent.

Additional embodiments provide the use of a compound of the invention as a nucleic acid reporter molecule. A further embodiment provides the use of a compound of the invention for detecting RNA.

### BRIEF DESCRIPTION OF THE FIGURES

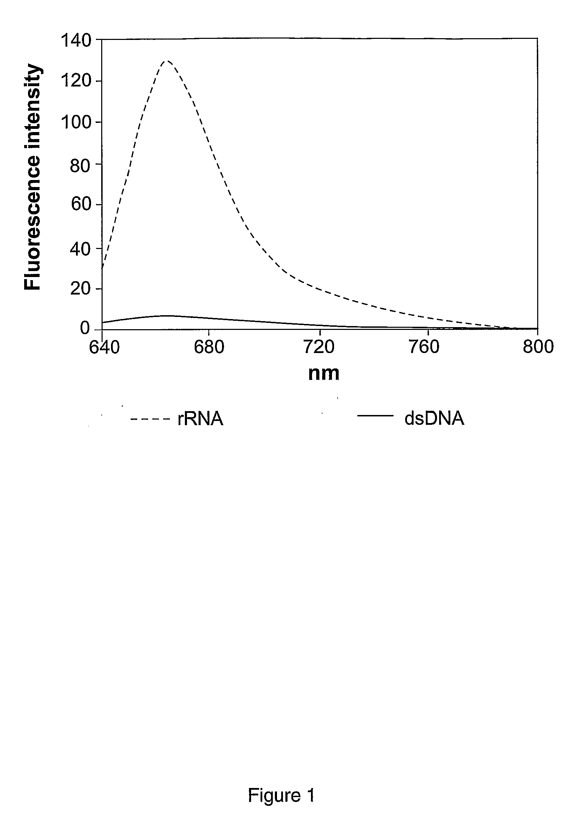

**Figure 1****:** A plot showing the intensity and emission spectra of the fluorescent signal from Compound **20** when associated with either rRNA or DNA (calf thymus) in solution, with excitation at 630 nm, as described in Example 4. Compound **20** demonstrates a 12 to 13-fold increase in signal when bound to RNA when compared to DNA.

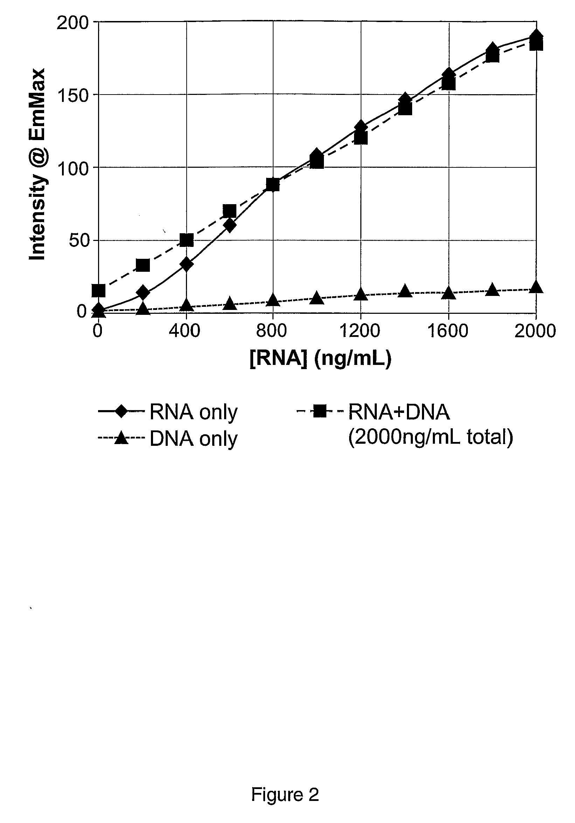

**Figure 2****:** A plot showing the intensity of the fluorescent signal from Compound **20** in the presence of rRNA, DNA (calf thymus) and a mixture of RNA and DNA in solution. The results indicate that Compound **20**, in solution, demonstrates selectivity for rRNA in the presence of 1000 ng/ml of DNA, as described in Example 5.

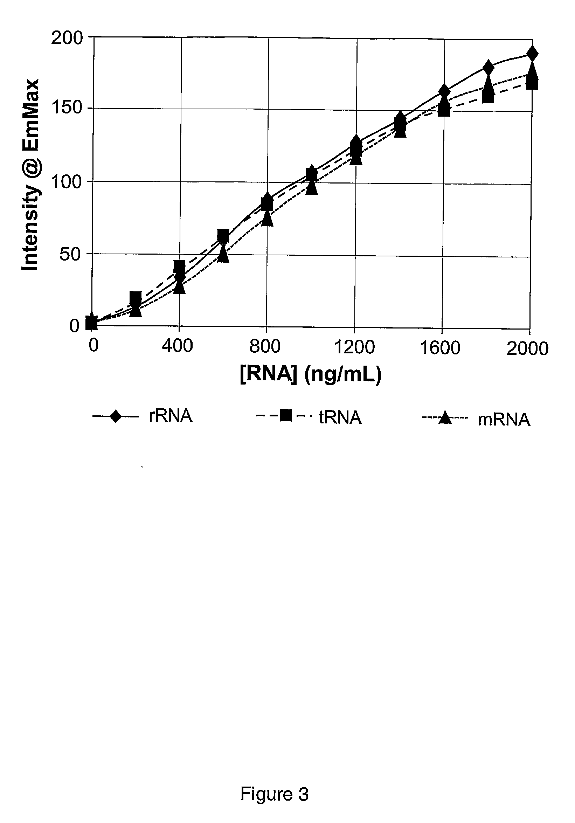

**Figure 3****:** A plot showing the fluorescence intensity of Compound **20** when associated with rRNA, tRNA and mRNA, respectively, in increasing concentrations of the RNA. Compound **20** demonstrates an equal affinity for the three different species of RNA, as described in Example 6.

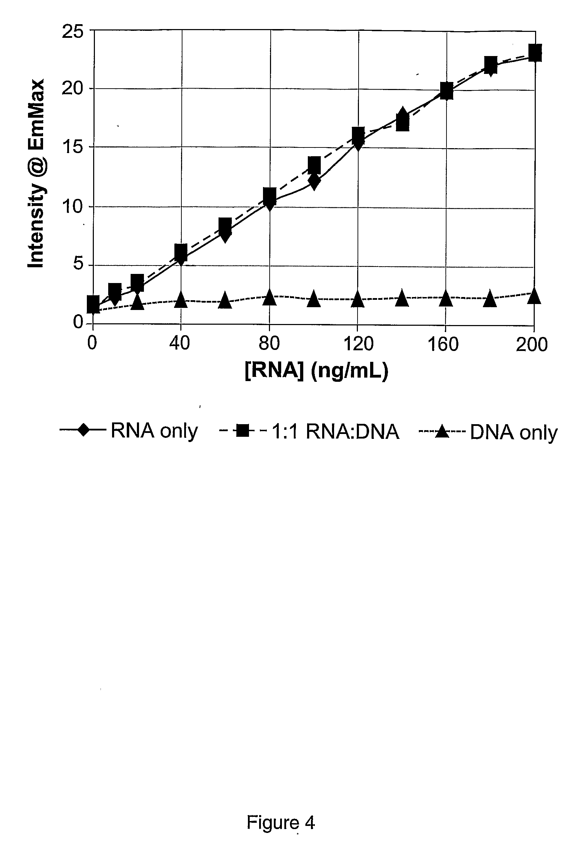

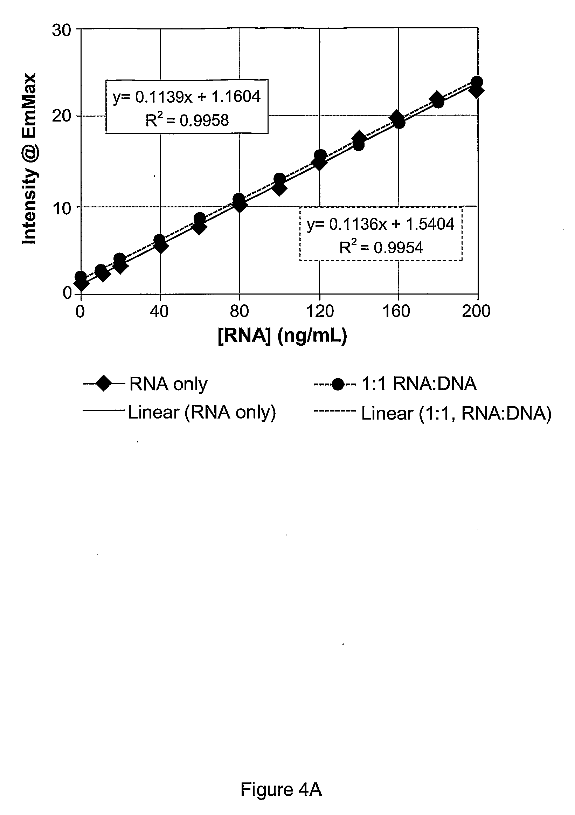

**Figure 4****:** A plot showing the intensity of the fluorescent signal from Compound **20** at 0.025 µM when bound to varying concentrations of rRNA, or a 1:1 mixture of RNA and DNA in solution. Figure 4 is an overlay of two graphs with concentration of RNA 0-200 ng/mL, as described in Example 7.
**Figure 4A****:** A plot showing the linear correlations of the plots of Fig. 4. The similarity of the relationship between fluorescence emission intensity and RNA concentration, even in the presence of varying amounts of DNA, show the selectivity of Compound **20** for RNA., as described in Example 7.

### DETAILED DESCRIPTION

### Definitions

Before describing the present invention in detail, it is to be understood that this invention is not limited to specific compositions or process steps, as such may vary. It must be noted that, as used in this specification and the appended claims, the singular form "a", "an" and "the" include plural referents unless the context clearly dictates otherwise. Thus, for example, reference to "a compound" includes a plurality of compounds and reference to "a nucleic acid" includes a plurality of nucleic acids and the like.

Unless defined otherwise, all technical and scientific terms used herein have the same meaning as commonly understood by one of ordinary skill in the art to which this invention is related. The following terms are defined for the purposes of understanding the present disclosure.

Certain compounds of the present invention can exist in unsolvated forms as well as solvated forms, including hydrated forms. In general, the solvated forms are equivalent to unsolvated forms and are encompassed within the scope of the present invention. Certain compounds of the present invention may exist in multiple crystalline or amorphous forms. In general, all physical forms are equivalent for the uses contemplated by the present invention and are intended to be within the scope of the present invention.

Certain compounds of the present invention possess asymmetric carbon atoms (optical centers) or double bonds; the racemates, diastereomers, geometric isomers and individual isomers are encompassed within the scope of the present invention.

The compounds described herein may be prepared as a single isomer (*e.g*., enantiomer, *cis-trans*, positional, diastereomer) or as a mixture of isomers. In a preferred embodiment, the compounds are prepared as substantially a single isomer. Methods of preparing substantially isomerically pure compounds are known in the art. For example, enantiomerically enriched mixtures and pure enantiomeric compounds can be prepared by using synthetic intermediates that are enantiomerically pure in combination with reactions that either leave the stereochemistry at a chiral center unchanged or result in its complete inversion. Alternatively, the final product or intermediates along the synthetic route can be resolved into a single stereoisomer. Techniques for inverting or leaving unchanged a particular stereocenter, and those for resolving mixtures of stereoisomers are well known in the art and it is well within the ability of one of skill in the art to choose and appropriate method for a particular situation. See, generally, Furniss et al. (eds.),VOGEL's ENCYCLOPEDIA OF PRACTICAL ORGANIC CHEMISTRY 5TH ED., Longman Scientific and Technical Ltd., Essex, 1991, pp. 809-816; and Heller, Acc. Chem. Res. 23: 128 (1990).

The compounds disclosed herein may also contain unnatural proportions of atomic isotopes at one or more of the atoms that constitute such compounds. For example, the compounds may be radiolabeled with radioactive isotopes, such as for example tritium (³H), iodine-125 (¹²⁵I) or carbon-14 (¹⁴C). All isotopic variations of the compounds of the present invention, whether radioactive or not, are intended to be encompassed within the scope of the present invention.

Where a disclosed compound includes a conjugated ring system, resonance stabilization may permit a formal electronic charge to be distributed over the entire molecule. While a particular charge may be depicted as localized on a particular ring system, or a particular heteroatom, it is commonly understood that a comparable resonance structure can be drawn in which the charge may be formally localized on an alternative portion of the compound.

Selected compounds having a formal electronic charge may be shown without an appropriate biologically compatible counterion. Such a counterion serves to balance the positive or negative charge present on the compound. As used herein, a substance that is biologically compatible is not toxic as used, and does not have a substantially deleterious effect on biomolecules. Examples of negatively charged counterions include, among others, chloride, bromide, iodide, sulfate, alkanesulfonate, arylsulfonate, phosphate, perchlorate, tetrafluoroborate, tetraarylboride, nitrate and anions of aromatic or aliphatic carboxylic acids. Preferred counterions may include chloride, iodide, perchlorate and various sulfonates. Examples of positively charged counterions include, among others, alkali metal, or alkaline earth metal ions, ammonium, or alkylammonium ions.

Where substituent groups are specified by their conventional chemical formulae, written from left to right, they equally encompass the chemically identical substituents, which would result from writing the structure from right to left, e.g., -CH₂O- is intended to also recite -OCH₂-. The term "acyl" or "alkanoyl" by itself or in combination with another term, means, unless otherwise stated, a stable straight or branched chain, or cyclic hydrocarbon radical, or combinations thereof, consisting of the stated number of carbon atoms and an acyl radical on at least one terminus of the alkane radical. The "acyl radical" is the group derived from a carboxylic acid by removing the -OH moiety therefrom.

The term "affinity" as used herein refers to the strength of the binding interaction of two molecules, such as a nucleic acid polymer and an intercalating agent or a positively charged moiety and a negatively charged moiety.

The term "alkyl," by itself or as part of another substituent means, unless otherwise stated, a straight or branched chain hydrocarbon radical, or combination thereof, which can include divalent ("alkylene") and multivalent radicals, having the number of carbon atoms designated (*i.e.* C₁-C₁₀ means one to ten carbons). Examples of saturated hydrocarbon radicals include, but are not limited to, groups such as methyl, ethyl, n-propyl, isopropyl, n-butyl, t-butyl, isobutyl, sec-butyl, cyclohexyl, (cyclohexyl)methyl, cyclopropylmethyl, homologs and isomers of, for example, n-pentyl, n-hexyl, n-heptyl, n-octyl, and the like.

Exemplary alkyl groups of use in the present invention contain between one and twenty five carbon atoms (e.g. methyl, ethyl and the like). Straight or branched hydrocarbon chains having eight or fewer carbon atoms will also be referred to herein as "lower alkyl". In addition, the term "alkyl" as used herein further includes one or more substitutions at one or more carbon atoms of the hydrocarbon chain fragment.

The term "aryl" as used herein refers to cyclic aromatic carbon chain having twenty or fewer carbon atoms, e.g., phenyl, naphthyl, biphenyl, and anthracenyl. One or more carbon atoms of the aryl group may also be substituted with, e.g., alkyl; aryl; heteroaryl; a halogen; nitro; cyano; hydroxyl, alkoxyl or aryloxyl; thio or mercapto, alkyl-, or arylthio; amino, alkylamino, arylamino, dialkyl-, diaryl-, or arylalkylamino; aminocarbonyl, alkylaminocarbonyl, arylaminocarbonyl, dialkylaminocarbonyl, diarylaminocarbonyl, or arylalkylaminocarbonyl; carboxyl, or alkyl- or aryloxycarbonyl; aldehyde; aryl- or alkylcarbonyl; iminyl, or aryl- or alkyliminyl; sulfo; alkyl- or alkylcarbonyl; iminyl, or aryl- or alkyliminyl; sulfo; alkyl- or arylsufonyl; hydroximinyl, or aryl- or alkoximinyl. In addition, two or more alkyl or heteroalkyl substituents of an aryl group may be combined to form fused aryl-alkyl or aryl-heteroalkyl ring systems (e.g., tetrahydronaphthyl). Substituents including heterocyclic groups (e.g., heteroaryloxy, and heteroaralkylthio) are defined by analogy to the above-described terms.

The terms "alkoxy," "alkylamino" and "alkylthio" (or thioalkoxy) are used in their conventional sense, and refer to those alkyl groups attached to the remainder of the molecule via an oxygen atom, an amino group, or a sulfur atom, respectively.

The term "heteroalkyl," by itself or in combination with another term, means, unless otherwise stated, a straight or branched chain, or cyclic carbon-containing radical, or combinations thereof, consisting of the stated number of carbon atoms and at least one heteroatom selected from the group consisting of O, N, Si, P, Se, and S, and wherein the nitrogen, phosphorous and sulfur atoms are optionally oxidized, and the nitrogen heteroatom is optionally be quaternized. The heteroatom(s) O, N, P, S, Se, and Si may be placed at any interior position of the heteroalkyl group or at the position at which the alkyl group is attached to the remainder of the molecule. Examples include, but are not limited to, -CH₂-CH₂-O-CH₃, -CH₂-CH₂-NH-CH₃, -CH₂-CH₂-N(CH₃)-CH₃, -CH₂-S-CH₂-CH₃, -CH₂-CH₂,-S(O)-CH₃, -CH₂-CH₂-S(O)₂-CH₃, -CH=CH-O-CH₃, -Si(CH₃)₃, -CH₂-CH=N-OCH₃, and -CH=CH-N(CH₃)-CH₃. Up to two heteroatoms may be consecutive, such as, for example, -CH₂-NH-OCH₃ and - CH₂-O-Si(CH₃)₃. Similarly, the term "heteroalkylene" by itself or as part of another substituent means a divalent radical derived from heteroalkyl, as exemplified, but not limited by, -CH₂-CH₂-S-CH₂-CH₂- and -CH₂-S-CH₂-CH₂-NH-CH₂-. For heteroalkylene groups, heteroatoms can also occupy either or both of the chain termini (*e.g*., alkyleneoxy, alkylenedioxy, alkyleneamino, alkylenediamino, and the like). Still further, for alkylene and heteroalkylene linking groups, no orientation of the linking group is implied by the direction in which the formula of the linking group is written. For example, the formula -C(O)₂R'- represents both - C(O)₂R'- and -R'C(O)₂-.

The terms "cycloalkyl" and "heterocycloalkyl", by themselves or in combination with other terms, represent, unless otherwise stated, cyclic versions of "alkyl" and "heteroalkyl", respectively. Additionally, for heterocycloalkyl, a heteroatom can occupy the position at which the heterocycle is attached to the remainder of the molecule. Examples of cycloalkyl include, but are not limited to, cyclopentyl, cyclohexyl, 1-cyclohexenyl, 3-cyclohexenyl, cycloheptyl, and the like. Examples of heterocycloalkyl include, but are not limited to, 1 - (1,2,5,6-tetrahydropyridyl), 1-piperidinyl, 2-piperidinyl, 3-piperidinyl, 4-morpholinyl, 3-morpholinyl, tetrahydrofuran-2-yl, tetrahydrofuran-3-yl, tetrahydrothien-2-yl, tetrahydrothien-3-yl, 1 -piperazinyl, 2-piperazinyl, and the like.

The term "heteroaryl" refers to aryl groups (or rings) that contain from one to four heteroatoms selected from N, O, S, and Se wherein the nitrogen and sulfur atoms are optionally oxidized, and the nitrogen atom(s) are optionally quaternized. A heteroaryl group can be attached to the remainder of the molecule through a heteroatom. Non-limiting examples of aryl and heteroaryl groups include phenyl, 1-naphthyl, 2-naphthyl, 4-biphenyl, 1-pyrrolyl, 2-pyrrolyl, 3-pyrrolyl, 3-pyrazolyl, 2-imidazolyl, 4-imidazolyl, pyrazinyl, 2-oxazolyl, 4-oxazolyl, 2-phenyl-4-oxazolyl, 5-oxazolyl, 3-isoxazolyl, 4-isoxazolyl, 5-isoxazolyl, 2-thiazolyl, 4-thiazolyl, 5-thiazolyl, 2-furyl, 3-furyl, 2-thienyl, 3-thienyl, 2-pyridyl, 3-pyridyl, 4-pyridyl, 2-pyrimidyl, 4-pyrimidyl, 5-benzothiazolyl, purinyl, 2-benzimidazolyl, 5-indolyl, 1-isoquinolyl, 5-isoquinolyl, 2-quinoxalinyl, 5-quinoxalinyl, 3-quinolyl, tetrazolyl, benzo[b]furanyl, benzo[b]thienyl, 2,3-dihydrobenzo[1,4]dioxin-6-yl, benzo[1,3]dioxol-5-yl and 6-quinolyl. Substituents for each of the above noted aryl and heteroaryl ring systems are selected from the group of acceptable substituents described below.

For brevity, the term "aryl" when used in combination with other terms (*e.g*., aryloxy, arylthioxy, arylalkyl) includes both aryl and heteroaryl rings as defined above. Thus, the term "arylalkyl" is meant to include those radicals in which an aryl group is attached to an alkyl group (*e.g*., benzyl, phenethyl, pyridylmethyl and the like) including those alkyl groups in which a carbon atom (*e.g*., a methylene group) has been replaced by, for example, an oxygen atom (*e.g*., phenoxymethyl, 2-pyridyloxymethyl, 3-(1-naphthyloxy)propyl, and the like).

Each of the above terms (*e.g*., "alkyl," "heteroalkyl," "aryl" and "heteroaryl") includes both substituted and unsubstituted forms of the indicated radical. Preferred substituents for each type of radical are provided below.

Substituents for the alkyl and heteroalkyl radicals (including those groups often referred to as alkylene, alkenyl, heteroalkylene, heteroalkenyl, alkynyl, cycloalkyl, heterocycloalkyl, cycloalkenyl, and heterocycloalkenyl) are generically referred to as "alkyl group substituents," and they can be one or more of a variety of groups selected from, but not limited to: -OR', =O, =NR', =N-OR', -NR'R", -SR', -halogen, -SiR'R"R"', -OC(O)R', -C(O)R', - CO₂R', -CONR'R", -OC(O)NR'R", -NR"C(O)R', -NR'-C(O)NR"R"', -NR"C(O)₂R', -NR-C(NR'R"R"')=NR"", -NR-C(NR'R")=NR"', -S(O)R', -S(O)₂R', -S(O)₂NR'R", -NRSO₂R', -CN and -NO₂ in a number ranging from zero to (2m'+1), where m' is the total number of carbon atoms in such radical. R', R", R"' and R"" each preferably independently refer to hydrogen, substituted or unsubstituted heteroalkyl, substituted or unsubstituted aryl, e.g., aryl substituted with 1-3 halogens, substituted or unsubstituted alkyl, alkoxy or thioalkoxy groups, or arylalkyl groups. When a compound includes more than one R group, for example, each of the R groups is independently selected as are each R', R", R'" and R"" groups when more than one of these groups is present. When R' and R" are attached to the same nitrogen atom, they can be combined with the nitrogen atom to form a 5-, 6-, or 7-membered ring. For example, -NR'R" is meant to include, but not be limited to, 1-pyrrolidinyl and 4-morpholinyl. From the above discussion of substituents, one of skill in the art will understand that the term "alkyl" is meant to include groups including carbon atoms bound to groups other than hydrogen groups, such as haloalkyl (*e.g*., -CF₃ and -CH₂CF₃) and acyl (*e.g*., -C(O)CH₃, - C(O)CF₃, -C(O)CH₂OCH₃, and the like).

Similar to the substituents described for the alkyl radical, substituents for the aryl and heteroaryl groups are generically referred to as "aryl group substituents." The substituents are selected from, for example: halogen, -OR', =O, =NR', =N-OR', -NR'R", -SR', -halogen, - SiR'R"R"', -OC(O)R', -C(O)R', -CO₂R', -CONR'R", -OC(O)NR'R", -NR"C(O)R', -NR'-C(O)NR"R"', -NR"C(O)₂R', -NR-C(NR'R"R"')=NR"", -NR-C(NR'R")=NR"', -S(O)R', - S(O)₂R', -S(O)₂NR'R", -NRSO₂R', -CN and -NO₂, -R', -N₃, -CH(Ph)₂, fluoro(C₁-C₄)alkoxy, and fluoro(C₁-C₄) alkyl, in a number ranging from zero to the total number of open valences on the aromatic ring system; and where R', R", R"' and R"" are preferably independently selected from hydrogen, substituted or unsubstituted alkyl, substituted or unsubstituted heteroalkyl, substituted or unsubstituted aryl and substituted or unsubstituted heteroaryl. When a compound includes more than one R group, for example, each of the R groups is independently selected as are each R', R", R'" and R"" groups when more than one of these groups is present. In the schemes that follow, the symbol X represents "R" as described above.

Two of the substituents on adjacent atoms of the aryl or heteroaryl ring may optionally be replaced with a substituent of the formula -T-C(O)-(CRR')_{q}-U-, wherein T and U are independently -NR-, -O-, -CRR'- or a single bond, and q is an integer of from 0 to 3. Alternatively, two of the substituents on adjacent atoms of the aryl or heteroaryl ring may optionally be replaced with a substituent of the formula -A-(CH₂)ᵣ-B-, wherein A and B are independently -CRR'-, -O-, -NR-, -S-, -S(O)-, -S(O)₂-, -S(O)₂NR'- or a single bond, and r is an integer of from 1 to 4. One of the single bonds of the new ring so formed may optionally be replaced with a double bond. Alternatively, two of the substituents on adjacent atoms of the aryl or heteroaryl ring may optionally be replaced with a substituent of the formula - (CRR')ₛ-X-(CR"R'")_{d}-, where s and d are independently integers of from 0 to 3, and X is -O-, -NR'-, -S-, -S(O)-, -S(O)₂-, or -S(O)₂NR'-. The substituents R, R', R" and R'" are preferably independently selected from hydrogen or substituted or unsubstituted (C₁-C₆)alkyl.

As used herein, the term "heteroatom" includes oxygen (O), nitrogen (N), sulfur (S), phosphorus (P), selenium (Se), and silicon (Si), among others.

The term "amino" or "amine group" refers to the group -NR'R" (or N⁺RR'R") where R, R' and R" are independently selected from the group consisting of hydrogen, alkyl, substituted alkyl, aryl, substituted aryl, aryl alkyl, substituted aryl alkyl, heteroaryl, and substituted heteroaryl. A substituted amine being an amine group wherein R' or R" is other than hydrogen. In a primary amino group, both R' and R" are hydrogen, whereas in a secondary amino group, either, but not both, R' or R" is hydrogen. In addition, the terms "amine" and "amino" can include protonated and quaternized versions of nitrogen, comprising the group -N⁺RR'R" and its biologically compatible anionic counterions.

The term "attachment site" as used herein refers to a site on a moiety or a molecule, e.g. a quencher, or a fluorescent dye, to which is covalently attached, or capable of being covalently attached, to a linker or another moiety.

The term "aqueous solution" as used herein refers to a solution that is predominantly water and retains the solution characteristics of water. Where the aqueous solution contains solvents in addition to water, water is typically the predominant solvent.

The term "Carboxyalkyl" as used herein refers to a group having the general formula - (CH₂)ₙCOOH wherein n is 1-18.

The term "carrier molecule" as used herein refers to a biological or a non-biological component that is covalently bonded to a compound of the present invention. Such components include, but are not limited to, an amino acid, a peptide, a protein, a polysaccharide, a nucleoside, a nucleotide, an oligonucleotide, a nucleic acid, a hapten, a psoralen, a drug, a hormone, a lipid, a lipid assembly, a synthetic polymer, a polymeric microparticle, a biological cell, a virus and combinations thereof.

The term "complex" as used herein refers to the association of two or more molecules, usually by non-covalent bonding.

The term "cyanine dye" as used herein refers to a fluorogenic compound that comprises 1) a substituted or unsubstituted benzazolium moiety, 2) a polymethine bridge and 3) a substituted or unsubstituted benzazolium, pyridinium or quinolinium moiety. These monomer or dye moieties are capable of forming a non-covalent complex with nucleic acids and demonstrating an increased fluorescent signal after formation of the nucleic acid-dye complex.

The term "detectable response" as used herein refers to a change in or an occurrence of, a signal that is directly or indirectly detectable either by observation or by instrumentation. Typically, the detectable response is an optical response resulting in a change in the wavelength distribution patterns or intensity of absorbance or fluorescence or a change in light scatter, fluorescence lifetime, fluorescence polarization, or a combination of the above parameters.

The term "kit" as used refers to a packaged set of related components, typically one or more compounds or compositions.

The term "Linker" or "L", as used herein, refers to a single covalent bond or a series of stable covalent bonds incorporating 1-20 nonhydrogen atoms selected from the group consisting of C, N, O, S and P that covalently attach the fluorogenic or fluorescent compounds to another moiety such as a chemically reactive group or a biological and non-biological component. Exemplary linking members include a moiety that includes -C(O)NH-, -C(O)O-, -NH-, -S-, -O-, and the like. A "cleavable linker" is a linker that has one or more cleavable groups that may be broken by the result of a reaction or condition. The term "cleavable group" refers to a moiety that allows for release of a portion, e.g., a fluorogenic or fluorescent moiety, of a conjugate from the remainder of the conjugate by cleaving a bond linking the released moiety to the remainder of the conjugate. Such cleavage is either chemical in nature, or enzymatically mediated. Exemplary enzymatically cleavable groups include natural amino acids or peptide sequences that end with a natural amino acid.

In addition to enzymatically cleavable groups, it is within the scope of the present invention to include one or more sites that are cleaved by the action of an agent other than an enzyme. Exemplary non-enzymatic cleavage agents include, but are not limited to, acids, bases, hydroxylamine, light (e.g., nitrobenzyl derivatives, phenacyl groups, benzoin esters), and heat. Many cleavable groups are known in the art. See, for example, Jung et al., Biochim. Biophys. Acta, 761: 152-162 (1983); Joshi et al., J. Biol. Chem., 265: 14518-14525 (1990); Zarling et al., J. Immunol., 124: 913-920 (1980); Bouizar et al., Eur. J. Biochem., 155: 141-147 (1986); Park et al., J. Biol. Chem., 261: 205-210 (1986); Browning et al., J. Immunol., 143: 1859-1867 (1989). Moreover, a broad range of cleavable, bifunctional (both homo- and hetero-bifunctional) spacer arms are commercially available.

An exemplary cleavable group, an ester, is cleavable group that may be cleaved by a reagent, e.g. sodium hydroxide or hydroxylamine, resulting in a carboxylate-containing fragment and a hydroxyl-containing product.

The linker can be used to attach the compound to another component of a conjugate, such as a targeting moiety (e.g., antibody, ligand, non-covalent protein-binding group, etc.), an analyte, a biomolecule, a drug and the like.

As used herein, "nucleic acid" or "nucleic acid polymer" means DNA, RNA, single-stranded, double-stranded, or more highly aggregated hybridization motifs, and any chemical modifications thereof. Modifications include, but are not limited to, those providing chemical groups that incorporate additional charge, polarizability, hydrogen bonding, and electrostatic interaction to the nucleic acid ligand bases or to the nucleic acid ligand as a whole. Such modifications include, but are not limited to, peptide nucleic acids (PNAs), phosphodiester group modifications (*e.g*., phosphorothioates, methylphosphonates), 2'-position sugar modifications, 5-position pyrimidine modifications, 8-position purine modifications, modifications at exocyclic amines, substitution of 4-thiouridine, substitution of 5-bromo or 5-iodo-uracil; backbone modifications, methylations, unusual base-pairing combinations such as the isobases, isocytidine and isoguanidine and the like. Nucleic acids can also include non-natural bases, such as, for example, nitroindole. Modifications can also include 3' and 5' modifications such as capping with a quencher, a fluorophore, a reactive group or another moiety.

The term "nucleic acid reporter molecule" as used herein refers to the present cyanine compounds wherein the methine bridge is substituted by at least one aryl, heteroaryl or substituted alkyl group.

The term "reactive group" as used herein refers to a group that is capable of reacting with another chemical group to form a covalent bond, i.e. is covalently reactive under suitable reaction conditions, and generally represents a point of attachment for another substance. The reactive group is a moiety, such as carboxylic acid, amine, alcohol or succinimidyl ester, that is capable of chemically reacting with a functional group on a different compound to form a covalent linkage resulting in a fluorescent or fluorogenic labeled component. Reactive groups generally include nucleophiles, electrophiles and photoactivatable groups.

Exemplary reactive groups include, but not limited to, olefins, acetylenes, alcohols, phenols, ethers, oxides, halides, aldehydes, ketones, carboxylic acids, esters, amides, cyanates, isocyanates, thiocyanates, isothiocyanates, amines, hydrazines, hydrazones, hydrazides, diazo, diazonium, nitro, nitriles, mercaptans, sulfides, disulfides, sulfoxides, sulfones, sulfonic acids, sulfinic acids, acetals, ketals, anhydrides, sulfates, thiosulfates, sulfenic acids isonitriles, amidines, imides, imidates, nitrones, hydroxylamines, oximes, hydroxamic acids thiohydroxamic acids, allenes, ortho esters, sulfites, enamines, ynamines, ureas, pseudoureas, semicarbazides, carbodiimides, carbamates, imines, azides, azo compounds, azoxy compounds, and nitroso compounds. Reactive functional groups also include those used to prepare bioconjugates, e.g., N-hydroxysuccinimide esters, maleimides and the like. Methods to prepare each of these functional groups are well known in the art and their application to or modification for a particular purpose is within the ability of one of skill in the art (see, for example, Sandler and Karo, eds. ORGANIC FUNCTIONAL GROUP PREPARATIONS, Academic Press, San Diego, 1989).

The term "reporter molecule" as used herein refers to any luminescent molecule that is capable of associating with a nucleic acid polymer and producing a detectable signal. Typically, reporter molecules include unsymmetrical cyanine dyes, homo- or heterodimers or oligomers of cyanine dyes, ethidium bromide, DAPI, Hoechst, acridine and styryl dyes that are capable of producing a detectable signal upon appropriate wavelength excitation.

The term "salt thereof," as used herein includes salts of the agents of the invention and their conjugates, which are preferably prepared with relatively nontoxic acids or bases, depending on the particular substituents found on the compounds described herein. When compounds of the present invention contain relatively acidic functionalities, base addition salts can be obtained by contacting the neutral form of such compounds with a sufficient amount of the desired base, either neat or in a suitable inert solvent. Examples of base addition salts include sodium, potassium, calcium, ammonium, organic amino, or magnesium, or a similar salt. When compounds of the present invention contain relatively basic functionalities, acid addition salts can be obtained by contacting the neutral form of such compounds with a sufficient amount of the desired acid, either neat or in a suitable inert solvent. Examples of addition salts include those derived from inorganic acids like hydrochloric, hydrobromic, nitric, carbonic, monohydrogencarbonic, phosphoric, monohydrogenphosphoric, dihydrogenphosphoric, sulfuric, monohydrogensulfuric, hydriodic, or phosphorous acids and the like, as well as the salts derived from relatively nontoxic organic acids like acetic, propionic, isobutyric, maleic, malonic, benzoic, succinic, suberic, fumaric, lactic, mandelic, phthalic, benzenesulfonic, p-tolylsulfonic, citric, tartaric, methanesulfonic, and the like. Also included are salts of amino acids such as arginate and the like, and salts of organic acids like glucuronic or galacturonic acids and the like (see, for example, Berge et al., "Pharmaceutical Salts", Journal of Pharmaceutical Science, 1977, 66, 1-19). Certain specific compounds of the present invention contain both basic and acidic functionalities that allow the compounds to be converted into either base or acid addition salts.

The term "sample" as used herein refers to any material that may contain nucleic acid. The sample may also include diluents, buffers, detergents, and contaminating species, debris and the like that are found mixed with the target. Illustrative examples include urine, sera, blood plasma, total blood, saliva, tear fluid, cerebrospinal fluid, secretory fluids and the like. Also included are solid, gel or substances such as mucus, body tissues, cells and the like suspended or dissolved in liquid materials such as buffers, extractants, solvents and the like. Typically, the sample is a live cell, a biological fluid that comprises endogenous host cell proteins, nucleic acid polymers, nucleotides, oligonucleotides, peptides and buffer solutions. The sample may be dissolved or suspended in an aqueous solution, a viable cell culture or immobilized on a solid or semi solid surface such as a polyacrylamide gel, membrane blot or on a microarray.

The term "solid support," as used herein, refers to a material that is substantially insoluble in a selected solvent system, or which can be readily separated (*e.g*., by precipitation) from a selected solvent system in which it is soluble. Solid supports useful in practicing the present invention can include groups that are activated or capable of activation to allow selected species to be bound to the solid support. Solid supports may be present in a variety of forms, including a chip, wafer or well, onto which an individual, or more than one compound, of the invention is bound such as a polymeric bead or particle.

The term "sulfoalkyl," as used herein refers to a group having the general formula -(CH₂)ₙSO⁻₃ wherein n is 1-18.

### The Compounds

In general, for ease of understanding the present invention, the nucleic acid reporter molecules and corresponding substituents will first be described in detail, followed by the many and varied methods in which the compounds find uses, which is followed by exemplified methods of use and synthesis of novel compounds that are particularly advantageous for use with the methods of the present invention.

The compounds of the present disclosure typically exhibit a fluorescence enhancement when non-covalently associated with a nucleic acid. For selected compounds, the fluorescence enhancement is greater when the nucleic acid is RNA than when the nucleic acid is DNA.

In one embodiment the present invention provides the claimed nucleic acid complexing compounds that comprise at substituted methine bridge. Without wishing to be bound by theory, it is believed that the selection of a nonhydrogen methine substituent (R⁴) may permit the tuning of selectivity and affinity of the resulting compound for particular nucleic acids. In particular, it is believed that the presence of a nonhydrogen methine substituent increases the selectivity and affinity of the resulting compound for RNA, when compared to the same compound when binding to DNA. The fluorescence enhancement of the resulting RNA complex may be greater than that of the corresponding DNA complex.

The methine substituent is typically bulky such that is affects the association with DNA.

The present nucleic acid reporter molecules may be described by the formula: 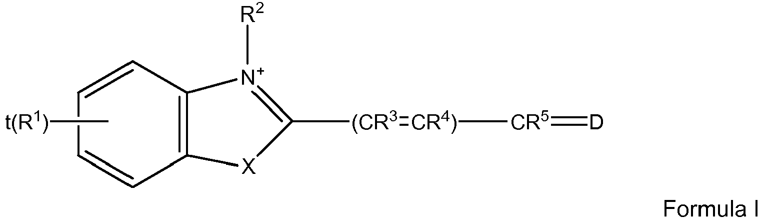 wherein t is an integer from 1 to 4, R² is an alkyl, X is S, each R¹ is H, R³ and R⁵ are hydrogen, R⁴ is a substituted phenyl moiety, and D is a substituted quinolinium moiety.

R⁴ may be a phenyl substituent that is further substituted by one or more of F, Cl, CF₃, -CO₂CH₃, NO₂, amino, C₁-C₆ alkoxy, phenoxy, and C₁-C₆ alkyl that is itself optionally further substituted by amino, sulfo, or carboxy.

In an exemplary embodiment, the present compounds have the formula:

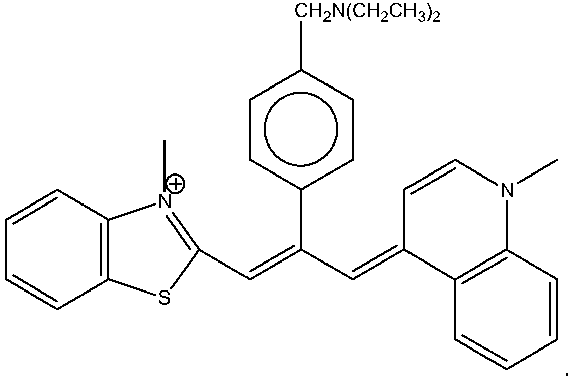

The compounds disclosed herein are readily modified to permit selectable alteration of the permeability, affinity, absorption, and emission properties (for example, see U.S. Patent no. 5,658,751). The resulting compounds may be tailored to cover most of the visible and near-infrared spectrum.

### Synthesis

The reporter compounds disclosed herein may be prepared using a two-part synthetic strategy: First, the preparation of an benzazolium moiety containing a methine substituent, followed by addition of the appropriate pyridinium, quinolinium or benzazolium moiety. Typically each component is selected so as to incorporate the desired and/or appropriate chemical substituents, or functional groups that may be converted to the desired and/or appropriate chemical substituents. The synthetic strategies and procedures that may be used to prepare and combine these precursors so as to yield the disclosed compounds is generally well understood by one skilled in the art, including a variety of modifications and variations thereof. Herein are some useful general methods for the synthesis of selected compounds, including the incorporation of some chemical modifications.

Synthesis of the disclosed compounds (including compounds that are not compounds of the invention), including the desired substituent on the trimethine bridge, may be facilitated by the initial preparation of selected intermediate compounds. For example, the intermediate benzazole moiety may be described using one of the following general structures. For the sake of simplicity, most of the substituents are shown as hydrogen, however this should not be considered limiting the breadth of the following disclosure.

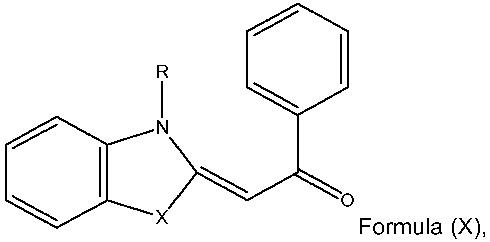

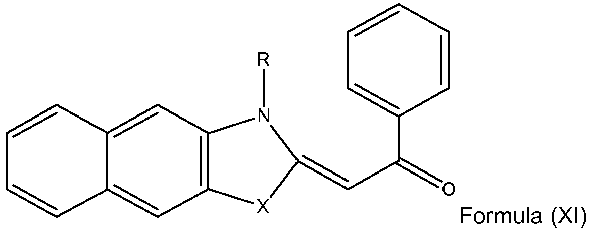

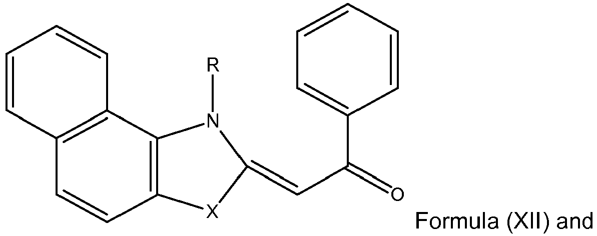

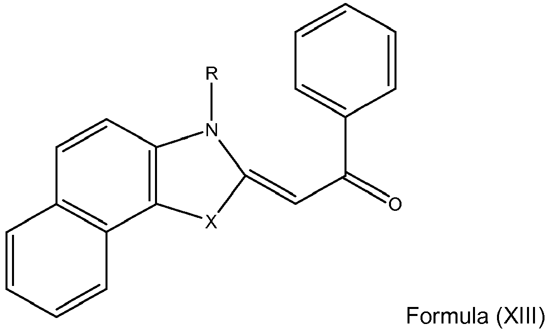

If X is O, the precursor compound is a benzoxazolium; if X is S it is a benzothiazolium; if X is Se it is a benzoselenazolium. The commercial availability of suitable starting materials and relative ease of synthesis may make compounds where X is O or S more attractive.

The desired R¹ substituents are typically incorporated in the parent benzazole molecule prior to quaternization with an alkylating agent. R² is typically incorporated by quaternization of the parent heterocycle with an alkylating agent, typically a source of (R²)⁺. The alkylating reagent may be an alkyl halide such as ethyl iodide, an alkylsulfonate such as methyl p-toluenesulfonate or a cyclic sulfonate such as propanesultone or butanesultone. The benzazolium moiety may then be subsequently reacted with an aromatic acid chloride to generate the desired benzoketone key intermediate which can be activated by phosphorous oxychloride followed by the addition of the desired pyridinium, quinolinium or benzazolium moiety, or "D" moiety.

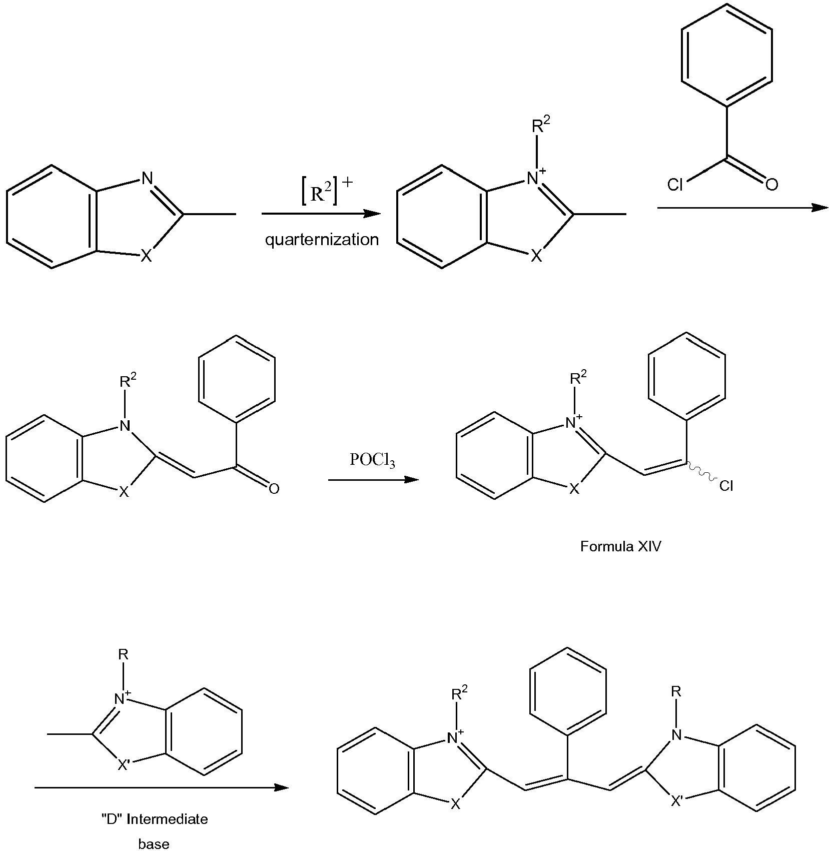

Although the above reaction scheme depicts the use of a benzoyl chloride reagent, it should be appreciated that the selection of reagent is dependent upon the nature of the methine substituent desired, and that a variety of reagents may be used, as shown in Example 1. Similarly, although the D moiety depicted above is a benzazole, a variety of D intermediates, including pyridinium, quinolinium and benzazolium intermediates, may be used to complete the synthesis as described above. Selected examples of such variations are described in Examples 1-6.

Specific examples of D moieties appropriate for the above synthetic scheme may be found in, for example, U.S. Patent Nos. 5,436,134. The pyridinium, quinolinium or benzazolium moiety may be fused to additional rings, resulting in dyes that absorb and emit at longer wavelengths (for example, see U.S. 6,027,709).

### Methods of Use

The present nucleic acid reporter molecules may be utilized without limit for the fluorescent detection of nucleic acid polymers in a test sample. The methods for the detection of single, double, triple or quadruple stranded DNA and RNA or a combination thereof comprises contacting a sample with a present nucleic acid reporter molecule to prepare a labeling mixture, incubating the sample with the staining solution for a sufficient amount of time for the present reporter molecules to complex with the nucleic acid, illuminating the sample with an appropriate wavelength and observing the illuminated labeling mixture whereby the nucleic acid polymer is detected.

The compound is typically combined with the sample as a staining solution. The staining solution is typically prepared by dissolving a present nucleic acid reporter molecule in an aqueous solvent such as water, a buffer solution or assay solution, such as phosphate buffered saline, or an organic solvent such as dimethylsulfoxide (DMSO), dimethylformamide (DMF), methanol, ethanol or acetonitrile. Typically, the present nucleic acid reporter molecules are first dissolved in an organic solvent such as DMSO as a stock solution. The stock solution is typically prepared about 100-300X more concentrated that the effective working concentration. Thus, the stock solution is diluted to an effective working concentration in an aqueous solution that optionally includes appropriate buffering components and a detergent. An effective working concentration of the present compounds is the amount sufficient to give a detectable optical response when complexed with nucleic acid polymers. Typically, the effective amount is about 10 nM to 10 µM. Most preferred is about 20 nM to 1 µM. For selected reporter compounds, staining is optimal when the staining solution has a concentration of about 0.04 µM to about 0.1 µM. It is generally understood that the specific amount of the nucleic acid reporter molecules present in a staining solution is determined by the physical nature of the sample and the nature of the analysis being performed.

In an embodiment, the staining solution contains a detergent. This is particularly useful when the nucleic acid is present in an aqueous sample solution. Without wishing to be bound by a theory it appears that a low concentration of detergent stabilizes the present nucleic acid reporter molecule when present in solution. Thus the staining solution can be combined with an aqueous sample providing an optimized solution based detection assay. Detergents include, but are not limited to, CHAPS, Triton^{™}-X, SDS and Tween^{®} 20. The detergent is typically present in an aqueous solution at a concentration from about .0001% to about 0.2% (w/v). More specifically the detergent is present from about 0.0015% to about 0.005% (w/v). In an exemplary embodiment a staining solution comprises a present nucleic acid reporter molecule present at about 0.04 µM and the detergent CHAPS present at about 0.0025% (w/v).

In a further embodiment, the present staining solution contains an agent to reduce the signal to noise ratio. Such an agent improves the linearity of the curve obtained from a range of nucleic acid concentrations. Thus, in an exemplary embodiment, a staining solution for detecting RNA in the presence of DNA, contains a low concentration of DNA. Without wishing to be bound by a theory it appears that this low concentration associates with the present reporter molecules, which do not fluoresce, and lowers the background fluorescent signal. Preferably this DNA is double stranded and in one aspect the DNA is lambda DNA. Thus, in one embodiment, the present staining solution contains DNA in a concentration from about 1.0 µg/ml to about 0.05 µg/ml. More specifically the DNA is present about .05 µg/ml to about .01 µg/ml. Therefore, in an exemplary embodiment a present staining solution comprises a present nucleic acid reporter molecule present at about 0.04 µM and DNA at a concentration of about 0.2 µg/ml. In a further embodiment this staining solution would also include a detergent, as disclosed above.

Therefore, the present disclosure provides a staining solution that comprises a present nucleic acid reporter molecule in a buffer solution. When in an embodiment of the invention this staining solution comprises a detergent and in yet a further embodiment, the staining solution also comprises a low concentration of DNA.

The sample may be combined with the staining solution by any means that facilitates contact between the nucleic acid reporter molecules and the nucleic acid. The contact can occur through simple mixing, as in the case where the sample is a solution. The present reporter molecules may be added to the nucleic acid solution directly or may contact the solution on an inert matrix such as a blot or gel, a testing strip, a microarray, or any other solid or semisolid surface, for example where only a simple and visible demonstration of the presence of nucleic acids is desired. Any inert matrix used to separate the sample can be used to detect the presence of nucleic acids by observing the fluorescent response on the inert matrix. Thus, in one embodiment is provided a composition comprising a sample and a present nucleic acid reporter molecule of the invention. In one aspect this composition is an aqueous solution.

Alternatively, the sample may include cells and/or cell membranes. While selected examples of the compound disclosed herein may permeate cellular membranes rapidly and completely upon addition of the staining solution, any technique that is suitable for transporting the reporter molecules across cell membranes with minimal disruption of the viability of the cell and integrity of cell membranes is a valid method of combining the sample with the present reporter molecules for detection of intracellular nucleic acid. Examples of suitable processes include action of chemical agents such as detergents, enzymes or adenosine triphosphate; receptor- or transport protein-mediated uptake; pore-forming proteins; microinjection; electroporation; hypoosmotic shock; or minimal physical disruption such as scrape loading or bombardment with solid particles coated with or in the presence of the present reporter molecules.

The sample is incubated in the presence of the nucleic acid reporter molecules for a time sufficient to form the fluorescent nucleic acid-reporter molecule complex. Detectable fluorescence in a solution of nucleic acids is essentially instantaneous. Detectable fluorescence within cell membranes requires the permeation of the dye into the cell. While most present nucleic acid reporter molecules are not cell permeant due to the presence of at least one negatively charged moiety, it is envisioned that the present compounds could be adequately substituted to provide cell permeant versions of the present compounds. In general, visibly detectable fluorescence can be obtained in a wide variety of cells with certain cell permeant embodiments of the present invention within about 10-30 minutes after combination with the sample, commonly within about 10-20 minutes. While permeation and fluorescence should be rapid for all reporter molecules comprising an aromatic substituent on the pyridinium or quinolinium moiety of the D moiety, it is readily apparent to one skilled in the art that the time necessary for sufficient permeation of the dye, or sufficient formation of the fluorescent nucleic acid complex, is dependent upon the physical and chemical nature of the individual sample and the sample medium.

In another embodiment, is provided a complex comprising a present nucleic acid reporter molecule of the invention non-covalently associated with a nucleic acid polymer. To facilitate the detection of the nucleic acid-reporter molecule complex, the excitation or emission properties of the fluorescent complex are utilized. For example, the sample is excited by a light source capable of producing light at or near the wavelength of maximum absorption of the fluorescent complex, such as an ultraviolet or visible lamp, an arc lamp, a laser, or even sunlight. Preferably the fluorescent complex is excited at a wavelength equal to or greater than about 300 nm, more preferably equal to or greater than about 340 nm. The fluorescence of the complex is detected qualitatively or quantitatively by detection of the resultant light emission at a wavelength of greater than about 400 nm, more preferably greater than about 450 nm, most preferred greater than 480 nm. The emission is detected by means that include visible inspection, photographic film, or the use of current instrumentation such as fluorometers, quantum counters, plate readers, epifluorescence microscopes and flow cytometers or by means for amplifying the signal such as a photomultiplier.

In an exemplified embodiment, the present nucleic acid reporter compounds of the invention are used to detect RNA in the presence of DNA, wherein the method comprises the following steps:
a. combining a present nucleic acid reporter molecule with a sample to prepare a labeling mixture, wherein the nucleic acid reporter molecule has a RNA/DNA ratio of fluorescence enhancement greater than about one;
b. incubating the labeling mixture for a sufficient amount of time for the nucleic acid reporter molecule to associate with RNA in the sample to form an incubated mixture;
c. illuminating the incubated mixture with an appropriate wavelength to form an illuminated mixture; and,
d. observing the illuminated mixture whereby the RNA is detected in the presence of DNA.

Typically, the fluorescence of the RNA complex is distinguishable from the fluorescence of a DNA complex with the compound. This difference may be due to any detectable optical property, but in one embodiment, the fluorescence of the RNA complex is brighter than the fluorescence of a corresponding DNA complex with the compound. Therefore, in an exemplary embodiment, by comparing the fluorescence response of the RNA complex with a standard, the amount of RNA in the sample may be quantitated, even in the presence of DNA.

As discussed above, the RNA present in the sample may be present in a solution, or in or on a solid or semisolid support. In a preferred embodiment, the nucleic acid is present in an aqueous solution. The detection of RNA in solution may also be enhanced by the addition of a detergent to the staining solution. Exemplified detergents include, but are not limited to CHAPS, Triton^{™}-X, SDS and Tween^{®} 20. Particularly preferred is CHAPS, wherein the fluorescent signal in an aqueous solution is stabilized for at least 6 hours. The detection of RNA in a solution may also be further enhanced by the addition of a low concentration of DNA to the staining solution.

Typically, the fluorescence of the RNA complex is distinguishable from the fluorescence of a DNA complex with the compound by fluorescence intensity. This difference may be due to any detectable optical property, but in one embodiment, the fluorescence of the RNA complex is brighter than the fluorescence of a corresponding DNA complex with the compound.

By comparing the fluorescence response of the RNA complex with a standard, the amount of RNA in the sample may be quantitated, even in the presence of DNA.

As discussed above, the RNA present in the sample may be present in a solution, or in or on a solid or semisolid support. The RNA itself may be selected from one or more of mRNA, tRNA, and rRNA.

The method may also be enhanced by the addition of an additional detection reagent that exhibits a greater fluorescence response when associated with DNA than when associated with RNA. A variety of nucleic acid stains that fluoresce brightly when complexed with DNA are known in the art.

The present nucleic acid reporter molecules that are capable of producing a fluorescent intensity signal that is greater on RNA than on DNA are determined empirically. The relative selectivity of the present compounds for differentiating RNA and DNA may be readily evaluated as set out in Examples 2 to 9.

The foregoing methods having been described it is understood that the many and varied compounds of the present invention can be utilized with the many methods. The compounds not being limited to just those that are specifically disclosed.

In an exemplary embodiment the present methods employ a nucleic acid reporter molecule that comprises the formula 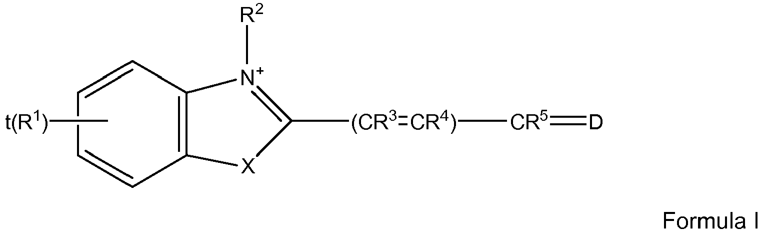 wherein t is an integer from 1 to 4, R² is an alkyl, X is S, each R¹ is H, R³ and R⁵ are hydrogen, R⁴ is a substituted phenyl moiety, and D is a substituted quinolinium moiety.

In an exemplary embodiment of the methods, the nucleic acid reporter molecule has the formula:

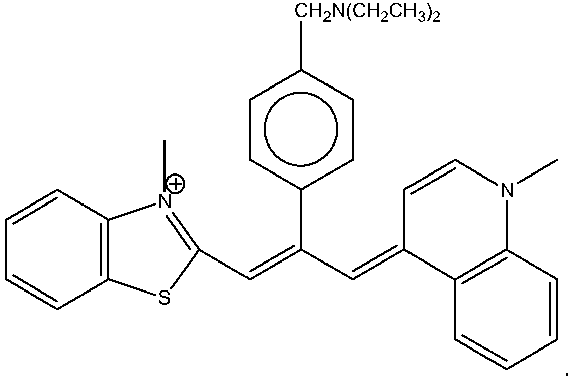

### Sample Preparation

The sample may be prepared using methods well known in the art for isolating nucleic acid for *in vitro* and solution based assay detection or well know methods for live cell or fixed cells for intracellular and/or *in vivo* detection of nucleic acids. The sample includes, without limitation, any biological derived material that is thought to contain a nucleic acid polymer. Alternatively, samples also include material that nucleic acid polymers have been added to such as a PCR reaction mixture, a polymer gel such as agarose or polyacrylamide gels or a microfluidic assay system. In another aspect of the present disclosure, the sample can also include a buffer solution that contains nucleic acid polymers to determine the present reporter molecules that are ideal under different assay conditions or to determine the present reporter molecules that are preferential RNA reporters.

The sample can be a biological fluid such as whole blood, plasma, serum, nasal secretions, sputum, saliva, urine, sweat, transdermal exudates, cerebrospinal fluid, or the like. Biological fluids also include tissue and cell culture medium wherein an analyte of interest has been secreted into the medium. Alternatively, the sample may be whole organs, tissue or cells from the animal. Examples of sources of such samples include muscle, eye, skin, gonads, lymph nodes, heart, brain, lung, liver, kidney, spleen, thymus, pancreas, solid tumors, macrophages, mammary glands, mesothelium, and the like. Cells include without limitation prokaryotic cells such as bacteria, yeast, fungi, mycobacteria and mycoplasma , and eukaryotic cells such as nucleated plant and animal cells that include primary cultures and immortalized cell lines. Typically prokaryotic cells include E. coli and S. aureus. Eukaryotic cells include without limitation ovary cells, epithelial cells, circulating immune cells, β cells, hepatocytes, and neurons.

In an exemplary embodiment, the sample comprises biological fluids, buffer solutions, live cells, fixed cells, eukaryotic cells, prokaryotic cells, nucleic acid polymers, nucleosides, nucleotides, a polymeric gel or tissue sections. In a further aspect, the sample comprises nucleic acid polymers in an aqueous buffer.

The nucleic acid may be either natural (biological in origin) or synthetic (prepared artificially). The nucleic acid may be present as nucleic acid fragments, oligonucleotides, or nucleic acid polymers. The nucleic acid may be present in a condensed phase, such as a chromosome. The presence of the nucleic acid in the sample may be due to a successful or unsuccessful experimental methodology, undesirable contamination, or a disease state. Nucleic acid may be present in all, or only part, of a sample, and the presence of nucleic acids may be used to distinguish between individual samples, or to differentiate a portion or region within a single sample.

The nucleic acid may be enclosed in a biological structure, for example contained within a viral particle, an organelle, or within a cell. The nucleic acids enclosed in biological structures may be obtained from a wide variety of environments, including cultured cells, organisms or tissues, unfiltered or separated biological fluids such as urine, cerebrospinal fluid, blood, lymph fluids, tissue homogenate, mucous, saliva, stool, or physiological secretions or environmental samples such as soil, water and air. The nucleic acid may be endogenous or introduced as foreign material, such as by infection or by transfection. The present nucleic acid reporter molecules can also be used for staining nucleic acids in a cell or cells that is fixed and treated with routine histochemical or cytochemical procedures.

Alternatively, the nucleic acid is not enclosed within a biological structure, but is present as a sample solution. The sample solution can vary from one of purified nucleic acids to crude mixtures such as cell extracts, biological fluids and environmental samples. In some cases it is desirable to separate the nucleic acids from a mixture of biomolecules or fluids in the solution prior to combination with the present reporter molecules. Numerous, well known, techniques exist for separation and purification of nucleic acids from generally crude mixtures with other proteins or other biological molecules. These include such means as electrophoretic techniques and chromatographic techniques using a variety of supports.

The sample may be incubated in the presence of the nucleic acid reporter molecules for a time sufficient to form a nucleic acid-reporter molecule complex. While permeation and complexation may be more or less rapid for the compounds disclosed herein, largely depending on the nature of the substituents present on the compound. It should be apparent to one skilled in the art that the time necessary for sufficient permeation of the dye, or sufficient formation of the resulting nucleic acid complex, is dependent upon the physical and chemical nature of the individual sample and the sample medium (see for example U.S. Patent no. 5,658,751).

### Illumination

The sample containing a nucleic acid-reporter molecule complex may be illuminated with a wavelength of light selected to give a detectable optical response, and observed with a means for detecting the optical response. By optical response is meant any detectable colorimetric or luminescent property of the complex. Typically, the optical response is related to the excitation or emission properties of the complex.

For example, the sample may be excited by a light source capable of producing light at or near the wavelength of maximum absorption of the fluorescent complex, such as an ultraviolet or visible lamp, an arc lamp, a laser, or even sunlight. The optical response is optionally detected by visual inspection, or by use of any of the following devices: CCD camera, video camera, photographic film, laser-scanning devices, fluorometers, photodiodes, quantum counters, epifluorescence microscopes, scanning microscopes, flow cytometers, fluorescence microplate readers, or by means for amplifying the signal such as photomultiplier tubes. Where the sample is examined using a flow cytometer, examination of the sample optionally includes sorting portions of the sample according to their fluorescence response.

The wavelengths of the excitation and emission bands of the nucleic acid reporter molecules vary with reporter molecule composition to encompass a wide range of illumination and detection bands. This allows the selection of individual reporter molecules for use with a specific excitation source or detection filter. In particular, present reporter molecules can be selected that possess excellent correspondence of their excitation band with the 633/647 nm band of the commonly used argon-ion laser or emission bands which are coincident with preexisting filters.

The presence, location, and distribution of nucleic acid, particularly RNA, may be detected using the spectral properties of the compound-nucleic acid complex. Once the dye-nucleic acid complex is formed, its presence may be detected and used as an indicator of the presence, location, or type of nucleic acids in the sample, or as a basis for sorting cells, or as a key to characterizing the sample or cells in the sample. Such characterization may be enhanced by the use of additional reagents, including fluorescent reagents. The nucleic acid concentration in a sample can also be quantified by comparison with known relationships between the fluorescence of the nucleic acid-dye complex and concentration of nucleic acids in the sample. In particular, fluorescence intensity may be compared to a standard curve prepared from samples containing known nucleic acid concentrations, particularly RNA concentrations.

### Kits

Suitable kits for forming a nucleic acid-reporter molecule complex and detecting the nucleic acid also form part of the present disclosure. Such kits can be prepared from readily available materials and reagents and can come in a variety of embodiments. The contents of the kit will depend on the design of the assay protocol or reagent for detection or measurement. All kits will contain instructions, appropriate reagents, and one or more of the presently disclosed nucleic acid reporter molecules. Typically, instructions include a tangible expression describing the reagent concentration or at least one assay method parameter such as the relative amounts of reagent and sample to be added together, maintenance time periods for reagent/sample admixtures, temperature, buffer conditions and the like to allow the user to carry out any one of the methods or preparations described above. In one aspect, the kit is formulated to facilitate the high-throughput screening of multiple samples, such as may be accomplished using automated methods.

Thus, a kit for detecting nucleic acid in a sample may comprise a compound as described above. The kit may further include instructions for performing one or more of the above disclosed methods, including the detection and/or quantitation of RNA in the presence of DNA.

The kit may optionally further include one or more of the following; sample preparation reagents, a buffering agent, a nucleic acid reporter molecule dilution buffer, an organic solvent or an additional detection reagent, particularly where the additional detection reagent is an additional distinct nucleic acid reporter molecule. Where the additional nucleic acid reporter is a DNA-selective nucleic acid stain, the kit may be useful for detecting and/or quantitating RNA in the presence of DNA. In one aspect the dilution buffer (for the present reporter molecules) comprises a detergent and/or a low concentration of DNA.

In an exemplary embodiment the present kits comprise a nucleic acid reporter molecule that comprises the formula 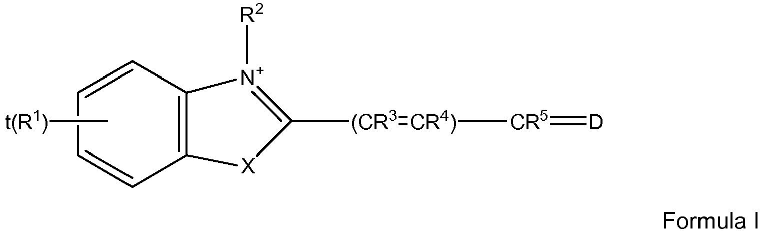 wherein t is an integer from 1 to 4, R² is an alkyl, X is S, each R¹ is H, R³ and R⁵ are hydrogen, R⁴ is a substituted phenyl moiety, and D is a substituted quinolinium moiety.

In an exemplary embodiment of the kits, the nucleic acid reporter molecule has the formula:

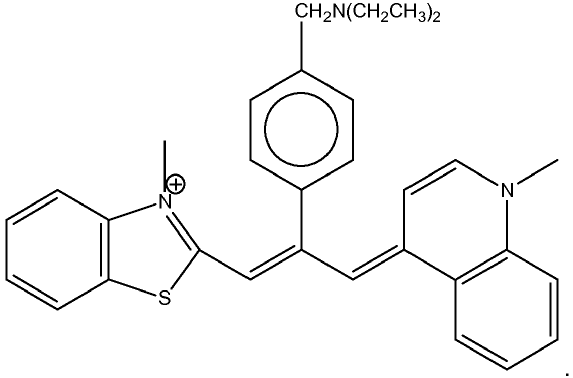

A detailed description of the compounds and methods of the disclosure having been provided above, the following examples are given for the purpose of illustration, and shall not be construed as being a limitation on the scope of the invention or of the appended claims.

### EXAMPLES

### Example 1 (Reference Example): Preparation of Compound 1 (2-(3-methyl-3H-benzothiazol-2-ylidene)-1-phenyl-ethanone)

A mixture of 0.58 g of 2,3-dimethylbenzothiazolium iodide and 0.42 g of benzoyl chloride in 20 mL of pyridine is heated at 60 °C for ten minutes. The pyridine is evaporated under reduced pressure and the residue is partitioned between chloroform and 1N HCl. Silica gel column with ethyl acetate hexane yields 0.25 g of Compound **1**.

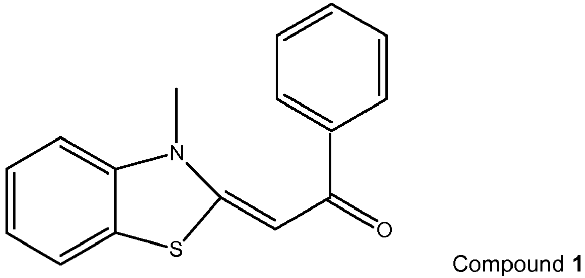

Other 2-(3-methyl-3H-benzothiazol-2-ylidene)-1-aryl/alkyl-ethanones may be prepared in an analogous fashion as Compound **1** with a corresponding acid chloride, as shown generally in the following synthetic scheme:

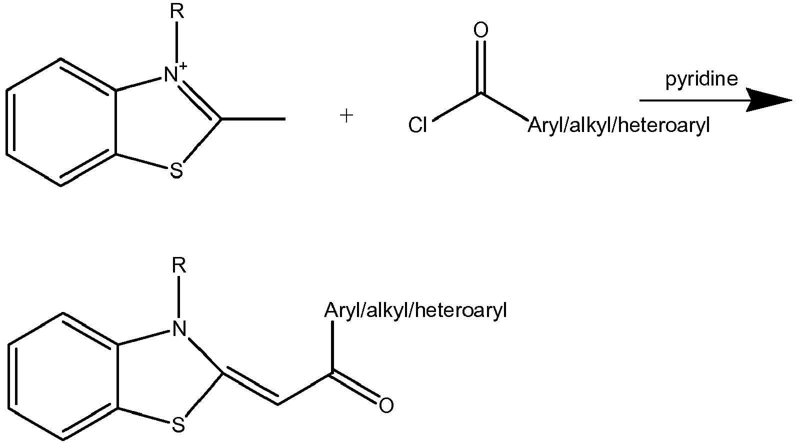

In particular, Compounds **5, 6, 8** and **12-15** may be prepared using the above synthetic strategy, among other compounds.

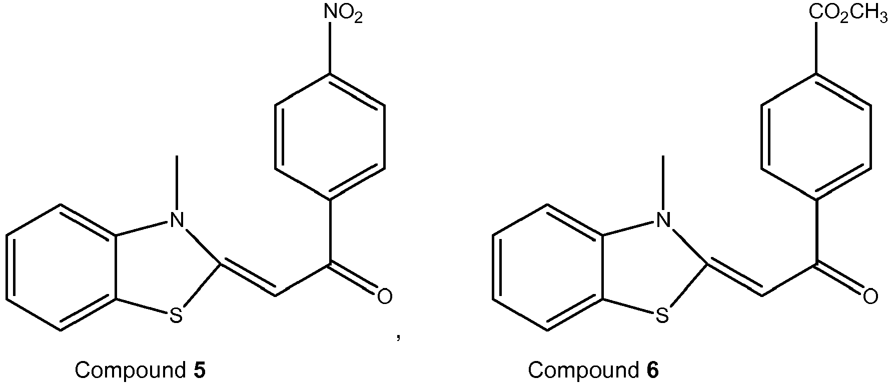

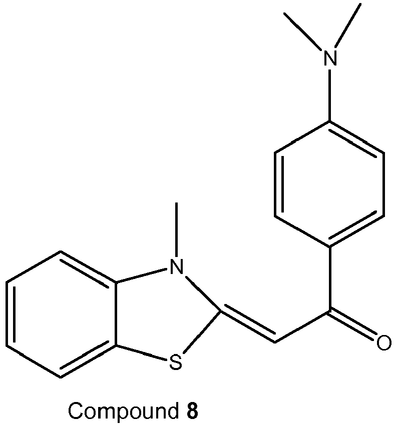

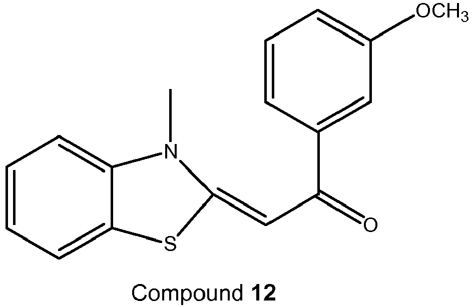

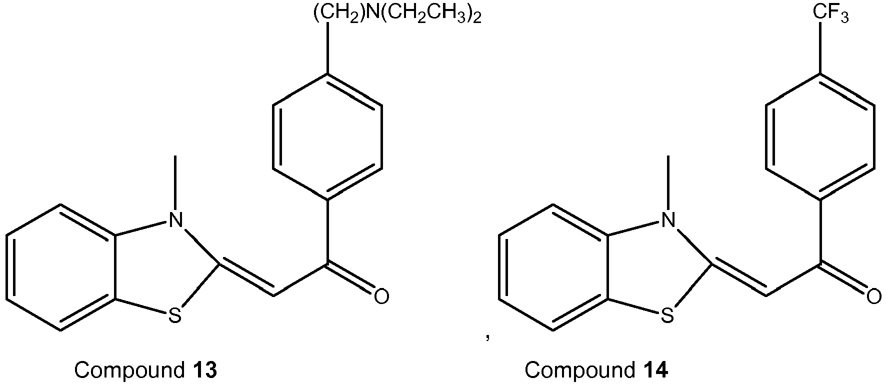

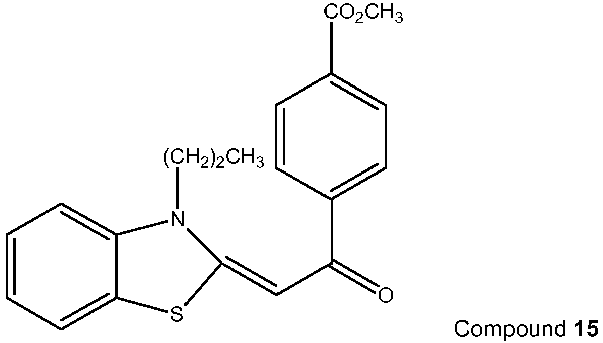

### Example 2: Preparation of Comparative Compound 16 and other Compounds

A mixture of 0.135 g of 2-(3-methyl-3H-benzothiazol-2-ylidene)-1-phenyl-ethanone and 0.15 mL of phosphorous oxychloride is stirred in 5 mL of dichloroethane at reflux for 2 hours. At the end of the period the dichloroethane is removed by evaporation and the residue is stirred in 30 mL of ethyl acetate and filtered to yield 0.16 g of the intermediate 2-(2-chloro-2-phenylvinyl)-3-methyl-benzothiazolium chloride, which is then reacted with 0.165 g of 1,4-dimethylquinolinium tosylate in 15 mL of methylene chloride in the presence of 0.14 g of triethylamine to generate the desired product.

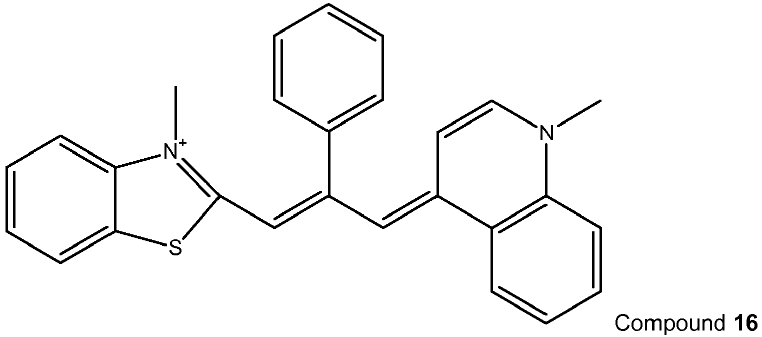

The following dye compounds (Compounds **18-20, 30, 34, 35, 37, 38, 41, 42** and **45** and Comparative Compound **21**) are prepared in an analogous manner as Comparative Compound **16**. The corresponding 2-(3-methyl-3H-benzothiazol-2-ylidene)-1-aryl-ethanones are first treated with phosphorous oxychloride, and the resulting benzothiazolium chloride compound is then coupled with an appropriate quinolinium or benzazolium in the presence of an appropriate base (e.g. triethylamine) to generate Compounds **18-20, 30, 34, 35, 37, 38, 41, 42** and **45** and Comparative Compound **21**. (*See*, Table 3)

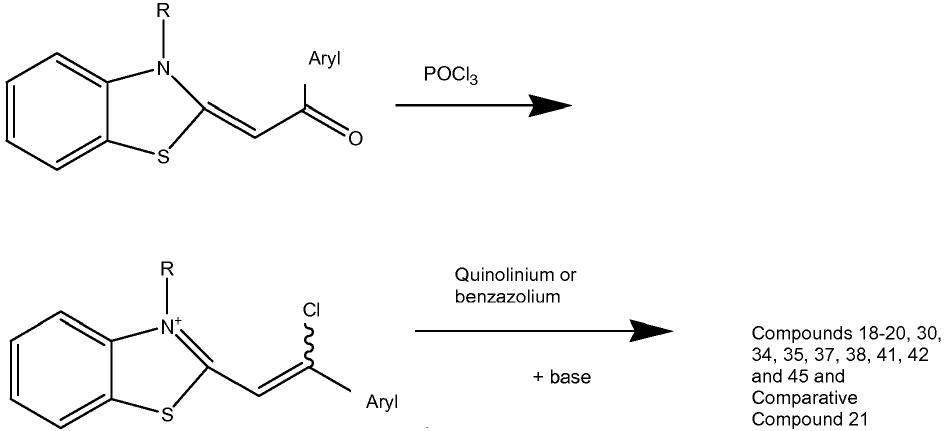

**Table 3:**

| **Compound** | **Ex/Em (nm)¹** | **Fluorescence Enhancement Ratio (RNA/DNA)²** |
|---|---|---|
| 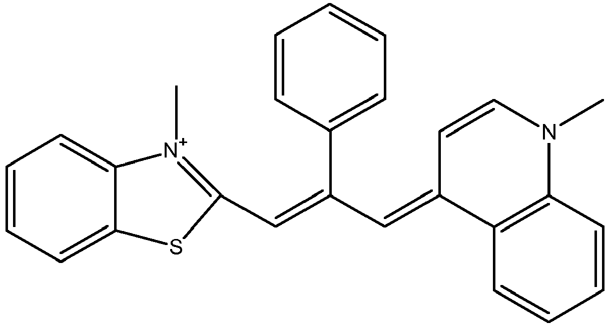 | 642/662 | 7 |
| Comparative Compound **16** | | |
| 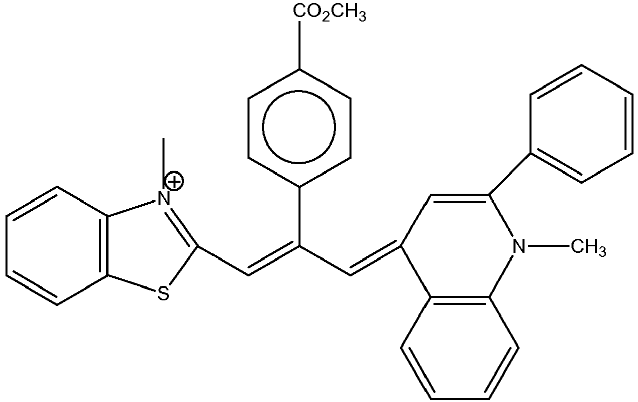 | 597/689 | 7.8 |
| Compound **18** | | |
| 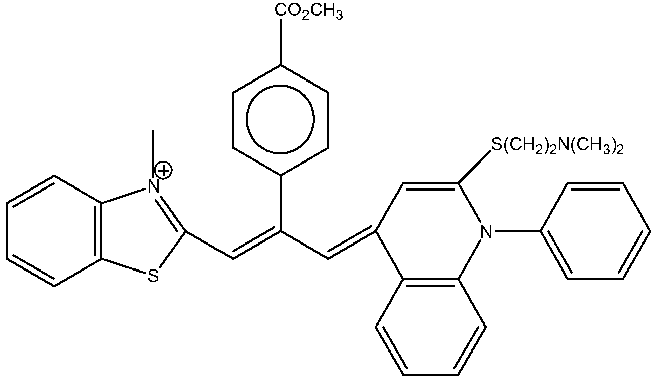 | 644/686 | 14.7 |
| Compound **19** | | |
| 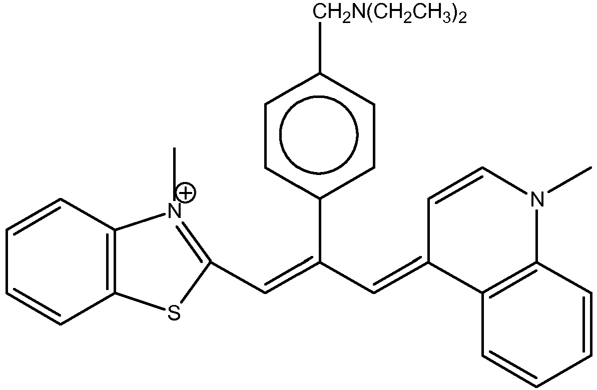 | 631/670 | 69 |
| Compound **20** | | |
| 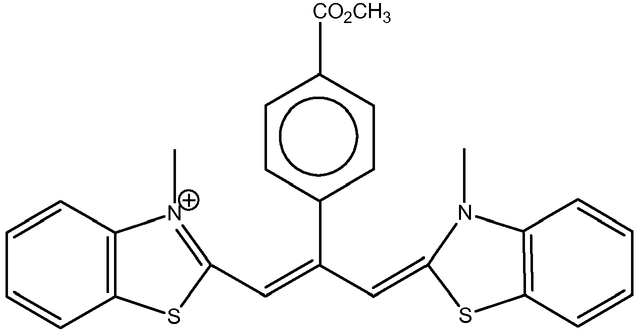 | 557/598 | 6.6 |
| Comparative Compound **21** | | |
| 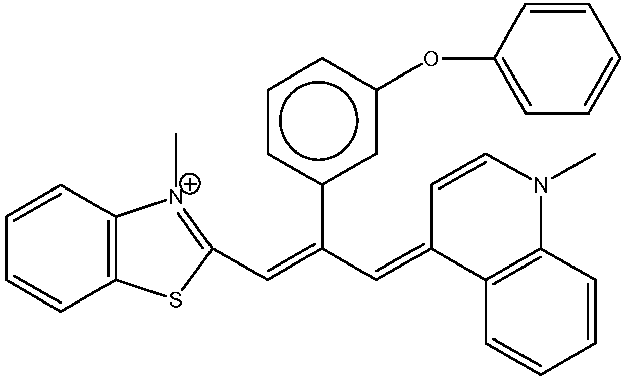 | 631/665 | 3.6 |
| Compound **30** | | |
| 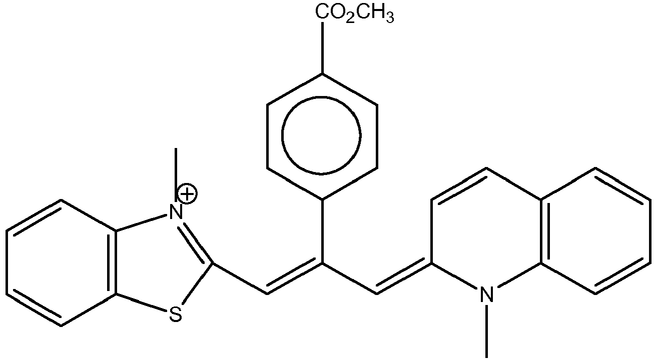 | 605/630 | 11.1 |
| Compound **34** | | |
| 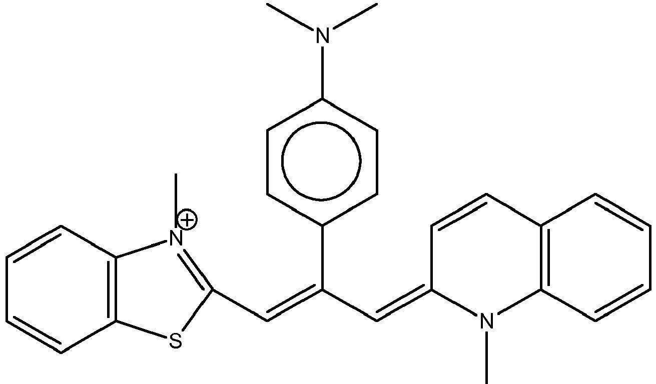 | 590/629 | 3.2 |
| Compound **35** | | |
| 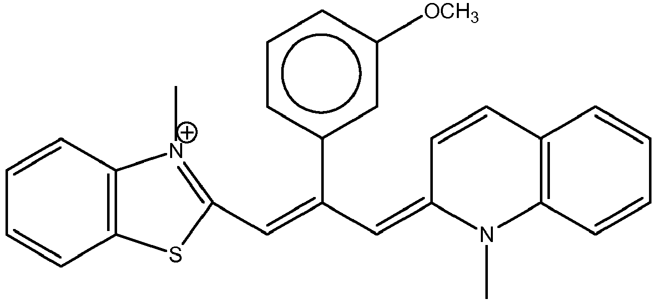 | 592/631 | 7.7 |
| Compound **37** | | |
| 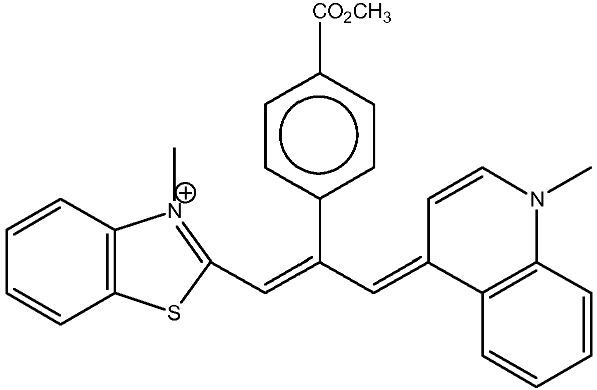 | 631/667 | 165 |
| Compound **38** | | |
| 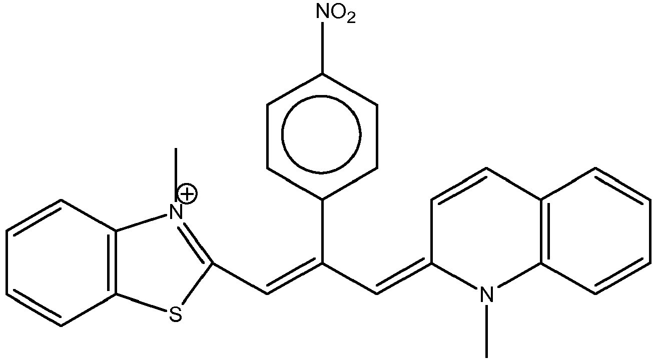 | 601/613 | 1.2 |
| Compound **41** | | |
| 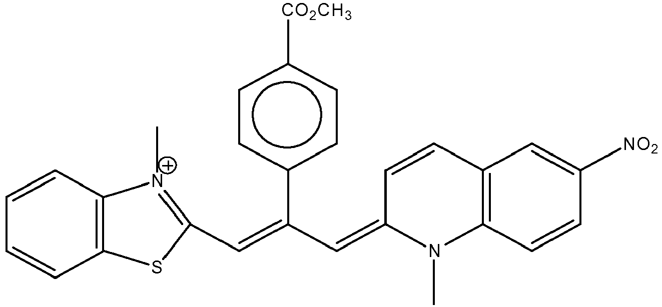 | 526/598 | 6 |
| Compound **42** | | |
| 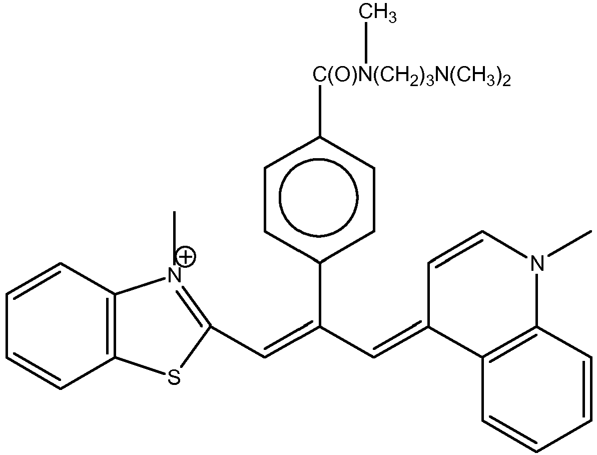 | 631/664 | 26.8 |
| Compound **45** | | |

| | | |
|---|---|---|
| ¹ Complex with nucleic acid ² The ratio of the fluorescence enhancement of the compound when associated with RNA to the fluorescence enhancement of the compound when associated with DNA | | |

### Example 3: Preparation of Compound 50

A mixture of 50 mg of Compound **20** and 0.5 mL of methyl iodide is heated in 3 mL of methanol in the presence of 0.01 mL of diisopropylethylamine at 50 °C for approximately 4 hours. The product (Compound **50**) is recovered via filtration.

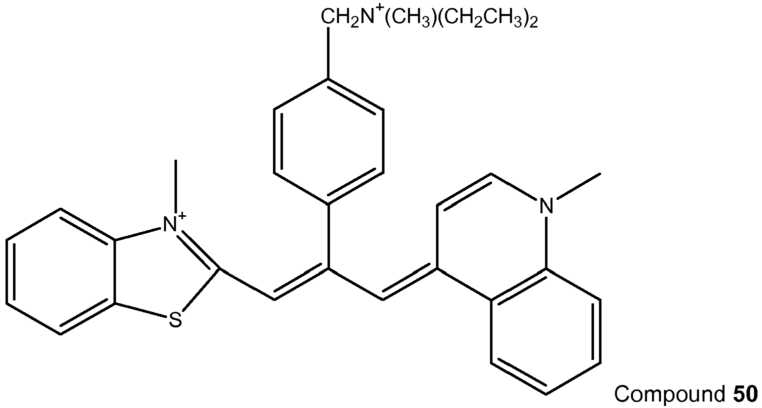

**Table 4:**

| **Compound** | **Excitation/Emission (nm)¹** | **Fluorescence Enhancement Ratio (RNA/DNA)²** |
|---|---|---|
| **50** | 631/667 | 200 |

| | | |
|---|---|---|
| ¹ Complex with nucleic acid ² The ratio of the fluorescence enhancement of the compound when associated with RNA to the fluorescence enhancement of the compound when associated with DNA | | |

### Example 4: Enhanced fluorescence emission of Compound 20 when associated with rRNA vs DNA.

A stock solution of Compound **20** is made by dissolving about 0.1 to about 0.3 mg of the compound in 1 mL of DMF. The stock solution is then diluted in 10 mM TRIS, 1 mM EDTA (pH 7.2) with 20 µL of stock solution. This dilute solution exhibits an optical density (OD) of -0.29562 and an extinction coefficient of 45,000, yielding a working concentration of ∼1.3-3.8 µM. Compound **21**, at a concentration of about 1.3-3.8 µM, is added to the test samples (1) rRNA and 2) DNA calf thymus. The RNA and DNA are present at a final concentration of about 104 µg/mL. After addition of the dye and the nucleic acid the samples are excited at 631 nm and the resulting fluorescence emission is recorded. The results are shown in Fig. 1.

Using this or similar methodology, a variety of compounds as described herein may be screened for their fluorescence properties when associated with nucleic acids. Similarly, compounds may be screened based upon their relative fluorescence enhancement when associated with RNA versus DNA. Compounds can be readily screened for a particular desired intensity, wavelength, or selectivity for RNA and/or DNA.

### Example 5: Association of Compound 20 with selected nucleic acids

A buffer solution of 200 µL of 10 mM TRIS, 1 mM EDTA (pH7.2) is added to the wells of a 96-well microplate. RNA and DNA (calf thymus) dilutions in TE (pH 7.2) are added to the appropriate wells to yield final concentrations of 0-2,000 ng/mL. In separate wells the following combinations of RNA and DNA are prepared:

| RNA (ng/mL) | DNA (ng/mL) |
|---|---|
| 0 | 2,000 |
| 400 | 1,600 |
| 800 | 1,200 |
| 1,200 | 800 |
| 1,600 | 400 |
| 2,000 | 0 |

Compound **20**, from a stock solution in DMF, is added to the microplate wells at a final concentration of 0.1 µM. The wells are read at 631 nm/ 665 nm Ex/Em. Compound **20** demonstrates an increased fluorescent intensity signal with increasing concentrations of RNA but little to no signal when combined with DNA alone. These results are confirmed wherein the combined RNA + DNA results in the same signal intensity for the corresponding concentration of RNA. These results are shown in Fig. 2.

Using this or similar methodology, a variety of compounds as described herein may be screened for utility in detecting RNA in the presence of DNA.

### Example 6: Binding of Compound 20 to RNA

A buffer solution of 200 µL of 10 mM TRIS, 1 mM EDTA (pH7.2) is added to the wells of a 96-well microplate. rRNA, tRNA and mRNA dilutions in TE (pH7.2) are added to the appropriate wells to yield final concentrations of 0-2,000 ng/mL. Compound **20**, as a stock solution in DMF, is added to the microplate wells to a final concentration of 0.1 µM. The samples in each well are excited at 631 nm, and the fluorescence emission at 665 nm is observed. Compound **20** exhibits comparable fluorescent signal when associated with each variety of RNA tested. The results are shown in Fig. 3.

### Example 7: Binding of Compound 20 to RNA, and a mixture of RNA and DNA

A buffer solution of 200 µL of 10 mM TRIS, 1 mM EDTA (pH 7.2) is added to the wells of a 96-well microplate. RNA and DNA (calf thymus) dilutions in TE (pH 7.2) are added to the appropriate wells to yield final concentrations of 0-200 ng/mL. In separate wells RNA and DNA are combined so that the combined nucleic acid concentration is always 200 ng/mL (For example, RNA and DNA respectively, 0 ng/mL + 200 ng/mL, 40 ng/mL + 160 ng/mL, 80 ng/mL + 120 ng/mL, 120 ng/mL + 80 ng/mL, 160 ng/mL + 40 ng/mL, and 200 ng/mL + 0 ng/mL. Compound **20**, prepared using a stock solution in DMF, is added to the microplate wells to a final concentration of 0.025 µM. The wells are excited at 631 nm, and the fluorescence recorded at 665 nm. Compound **20** demonstrates strong selectivity for RNA, as shown in Figs. 4 and 4A.

### Example 8: Detection of nucleic acids in electrophoretic gels

### Compound 20 stock solution

A stock solution of Compound **20** is prepared by dissolving 2.1 mg of Compound **20** in 2.0 mL DMSO.

### Loading Dye stock solution

A loading dye stock solution is prepared by adding 50 µL of Fermentas 6x loading dye solution (s/n R0611) to 550 µL 0.5X TBE.

### DNA Stock solution

3 µL DNA (λ *Hind*III, Roche, 0.25 µg/µL) is added to 57 µL of loading dye stock solution, and the resulting DNA stock solution is used to prepare a dilution series of DNA in 0.5X TBE.

### RNA stock solution

1 µL of ribosomal RNA (16S and 23S, Roche, 4 µg/µl) is added to 128 µL loading dye stock solution, and the resulting RNA stock solution is used to prepare a dilution series of RNA in 0.5X TBE.

A precast 1% agarose gel (Embi tec GE-4040) is then loaded with the respective dilution series as follows:

| | |
|---|---|
| Lane 1 | 125 ng DNA |
| Lane 2 | 62.5 ng DNA |
| Lane 3 | 31.2 ng DNA |
| Lane 4 | 15.6 ng DNA |
| Lane 5 | 7.8 ng DNA |
| Lane 6 | 3.9 ng DNA |
| Lane 7 | Blank |
| Lane 8 | 125 ng RNA |
| Lane 9 | 62.5 ng RNA |
| Lane 10 | 31.2 ng RNA |
| Lane 11 | 15.6 ng RNA |
| Lane 12 | 7.8 ng RNA |
| Lane 13 | 3.9 ng RNA |

The gel is electrophoresed for 15 minutes at 50 V in 0.5X TBE. The gel is then removed from the electrophoresis apparatus and placed directly in a staining solution prepared by adding 25 µL of the Compound **20** stock solution to 50 mL 0.5X TBE, and the gel is stained for 20 minutes. The stained nucleic acid bands are recorded using a Fuji FLA-3000 gel scanner, using 633 nm laser illumination, and a 675 nm filter. The fluorescence intensity of each band is then quantified, with a correction for background fluorescence. The stained RNA bands exhibit a fluorescence signal that is 60-200% more intense than the corresponding DNA bands.

### Example 9: Detection of single-stranded DNA on a microarray

A microarray consisting of a dilution series (208 pg, 104 pg, 52 pg, 26 pg, 13 pg, 6.5 pg) of a pUC DNA marker (pUC19 DNA digested with *Msp*I and pUC57 DNA digested with *Dra*I and *Hind*III, corresponding to pUC Mix Marker 8 supplied by MBI Fermentas, Hanover, MD) is printed on a slide using a Packard BioChip Piezo microarray spotter. The dilution series is printed using either 50% DMSO/50% H₂O to denature the DNA and render it single stranded, or using 3x SSC to retain double-strandedness. The slide is equilibrated in 0.1x SSC to remove any excess printing buffer, and then soaked in the stain solution at a concentration of 1 µM for the staining compound in ½X TBE for 5 minutes, followed by a 5 minute wash in ½X TBE to remove any excess compound. The slide is then imaged using the Packard ScanArray 5000XL using 633nm laser excitation. The resulting image clearly shows the top row of ssDNA is stained by the dye down to a concentration of 52 pg, while the dsDNA spots remained undetectable. This suggests that the compound has a higher affinity for ssDNA immobilized on solid supports compared to dsDNA. This affinity may be correlated to a corresponding affinity for RNA that is single stranded.

The preceding examples may be repeated similarly by substituting the specifically described nucleic acid reporter molecules of the preceding examples with those alternative compounds either generically or specifically described in the foregoing description.

## Claims

1. A compound having the formula: 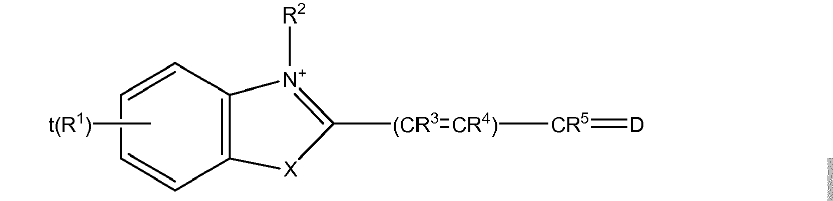 wherein
t is an integer from 1 to 4
R² is an alkyl
t is an integer from 1 to 4;
wherein R² is an alkyl;
X is S;
each R¹ is H;
R³ and R⁵ are hydrogen;
R⁴ is a substituted phenyl moiety; and
D is a substituted quinolinium moiety

2. The compound according to Claim 1, wherein the compound exhibits a fluorescence enhancement when non-covalently associated with a nucleic acid.

3. The compound according to Claim 2, wherein the fluorescence enhancement is greater when the nucleic acid is RNA than when the nucleic acid is DNA.

4. The compound according to any preceding claim, wherein the substituted phenyl moiety R⁴ is substituted by one or more of F, Cl, CF₃, -CO₂CH₃, amino, C₁-C₆ alkoxy, and C₁-C₆ alkyl that is itself optionally further substituted by amino, sulfo, or carboxy.

5. The compound according to claim 1, having a formula selected from:

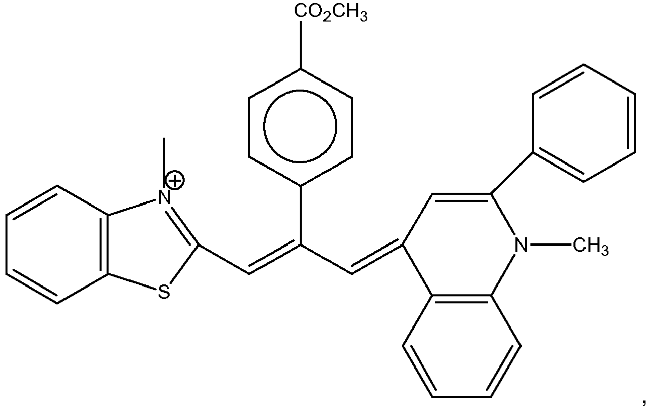

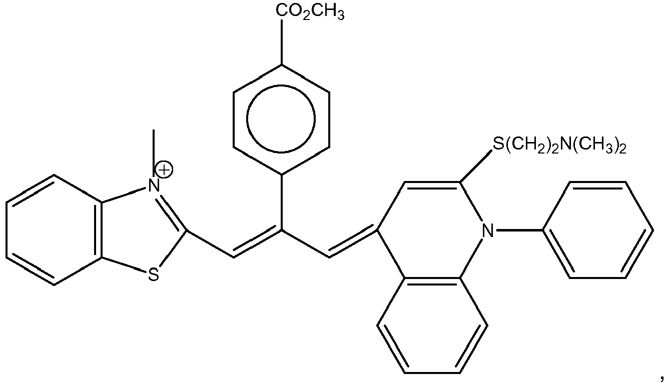

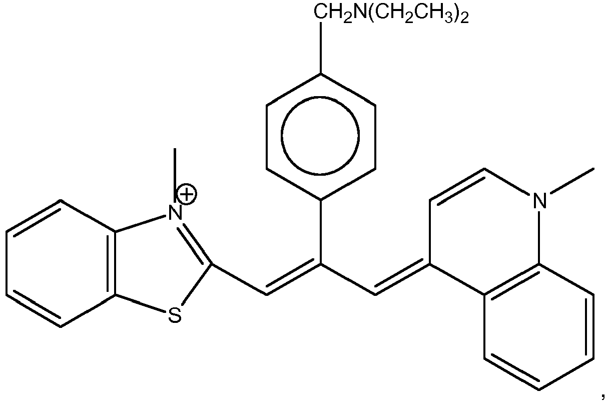

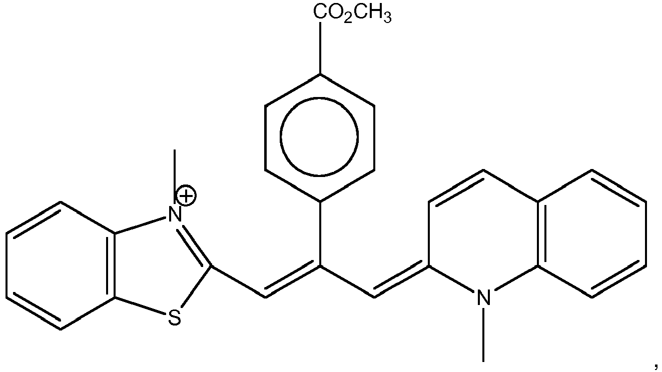

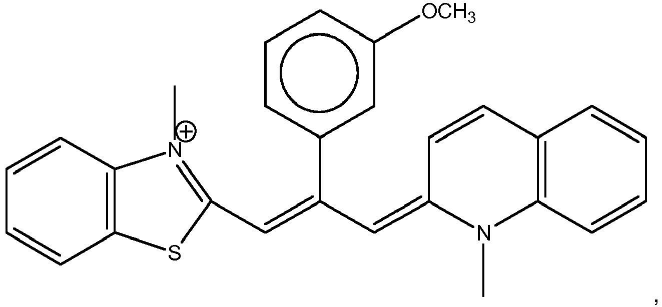

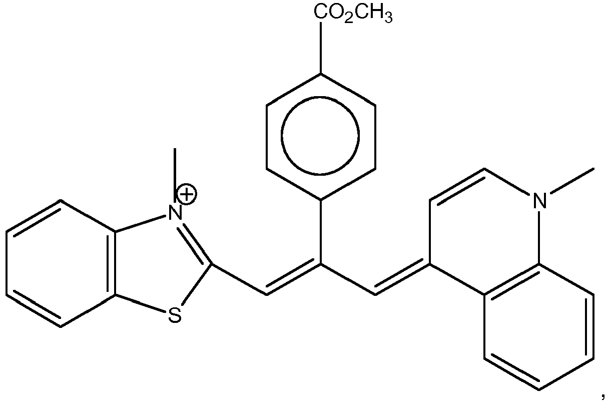

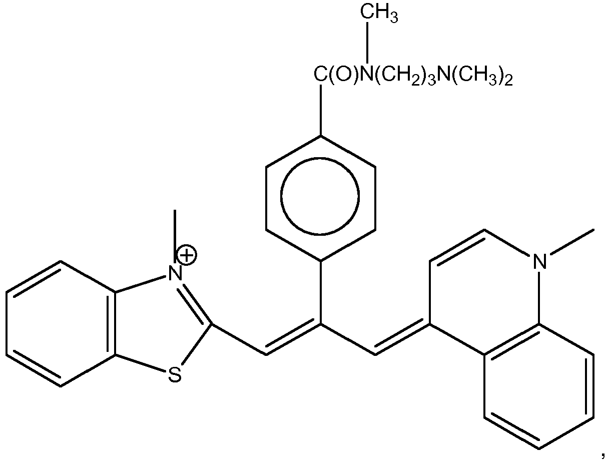

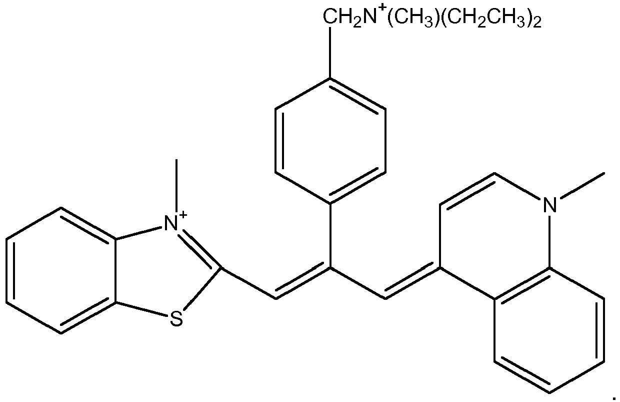

6. The compound according to Claim 1, having the formula

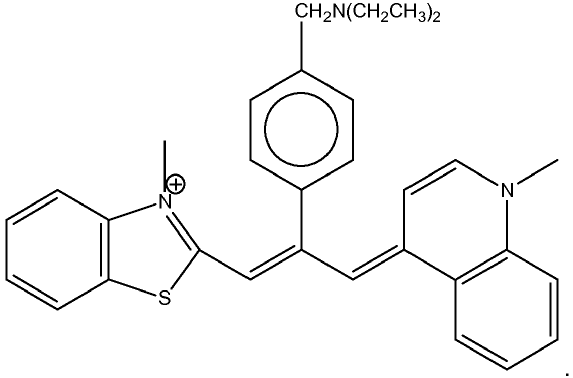

7. A composition comprising a nucleic acid reporter molecule of any preceding claim and a sample.

8. The composition according to claim 7, wherein the sample comprises biological fluids, buffer solutions, live cells, fixed cells, eukaryotic cells, prokaryotic cells, nucleic acid polymer, nucleosides, nucleotides, a polymeric gel or tissue sections.

9. The composition according to claim 8, wherein the nucleic acid polymer is single stranded RNA, double stranded RNA, single stranded DNA or double stranded DNA.

10. A complex comprising a nucleic acid reporter molecule of any of claims 1 to 6 non-covalently associated with a nucleic acid molecule.

11. The complex according to claim 10, wherein the nucleic acid molecule is single stranded RNA, double stranded RNA, single stranded DNA or double stranded DNA.

12. The complex according to claim 10 or claim 11, wherein the nucleic acid comprises mRNA, tRNA, or rRNA.

13. The complex according to any of claims 10 to 12, wherein the complex is present in a biological sample or in an aqueous or aqueous miscible solution.

14. The complex according to any of claims 10 to 12, wherein the complex is present in an electrophoretic matrix or polymeric gel.

15. A method for detecting the presence or absence of nucleic acid in a sample the method optionally comprising quantifying the nucleic acid, wherein the method comprises:
a) combining a nucleic acid reporter molecule of any of claims 1 to 6 with the sample to prepare a labeling mixture;
b) incubating the labeling mixture for a sufficient amount of time for the nucleic acid reporter molecule to associate with the nucleic acid in the sample to form an incubated mixture;
c) illuminating the incubated mixture with an appropriate wavelength to form an illuminated mixture; and,
d) observing the illuminated mixture whereby the presence or absence of the nucleic acid in the sample is detected.

16. The method according to claim 15, wherein the nucleic acid is RNA.

17. The method according to claim 15, wherein the nucleic acid comprises mRNA, tRNA, or rRNA.

18. A method for detecting or quantifying RNA in the presence of DNA, wherein the method comprises the steps:
a) combining a nucleic acid reporter molecule of any of claims 1 to 6 with a sample to prepare a labeling mixture, wherein the nucleic acid reporter molecule has a RNA/DNA ratio of fluorescence enhancement greater than about one;
b) incubating the labeling mixture for a sufficient amount of time for the nucleic acid reporter molecule to associate with RNA in the sample to form an incubated mixture;
c) illuminating the incubated mixture with an appropriate wavelength to form an illuminated mixture; and,
d) observing the illuminated mixture whereby the RNA is detected in the presence of DNA.

19. The method according to claim 18, wherein the fluorescence of the nucleic acid reporter molecule when non-covalently associated with RNA is distinguishable from the fluorescence of the nucleic acid reporter molecule when non-covalently associated with DNA.

20. The method according to claim 18 or claim 19, wherein the RNA comprises mRNA, tRNA, or rRNA.

21. A kit for detecting nucleic acid in a sample, wherein the kit comprises a nucleic acid reporter molecule of any of claims 1 to 6.

22. The kit according to claim 21, further comprising one or more of a sample preparation reagent, a buffering agent, an aqueous nucleic acid reporter molecule dilution buffer, an organic solvent, nucleic acid control, or an additional detection reagent.

23. The kit according to claim 22, wherein the nucleic acid reporter molecule dilution buffer contains a detergent.

24. The kit according to claim 23, wherein the detergent is present in a final concentration of about 0.0001% to about 0.005% (w/v).

25. The kit according to claim 23 or claim 24 wherein the detergent is CHAPS (3-[(3-cholamidopropyl)dimethylammonio]-1-propane sulfonate), Tween^{®} 20, Triton^{™}-X or SDS (sodium dodecyl sulfate).

26. The kit according to any of claims 23 to 25, wherein the nucleic acid reporter dilution buffer contains a low concentration of DNA.

27. A staining solution comprising a nucleic acid reporter molecule of any of claims 1 to 6 and a detergent.

28. The staining solution according to claim 27, wherein the detergent is present at a concentration of about 0.0001 % to about 0.005%.

29. The staining solution according to claim 27 or claim 28, wherein the detergent is CHAPS (3-[(3-cholamidopropyl)dimethylammonio]-1-propane sulfonate), Triton^{™}-X, SDS (sodium dodecyl sulfate) or Tween^{®} 20.

30. The staining solution according to any of claims 27 to 29, further comprising a low concentration of DNA.

31. The staining solution according to claim 30, wherein the DNA is present at a concentration of about 0.1µg/ml to about 0.5 µg/ml.

32. The use of a compound of any of claims 1 to 6 as a nucleic acid reporter molecule.

33. The use of a compound of any of claims 1 to 6 for detecting RNA.

34. The use of claim 33 wherein the RNA is in the presence of a low concentration of DNA.

## Patentansprüche

1. Eine Verbindung mit folgender Formel: 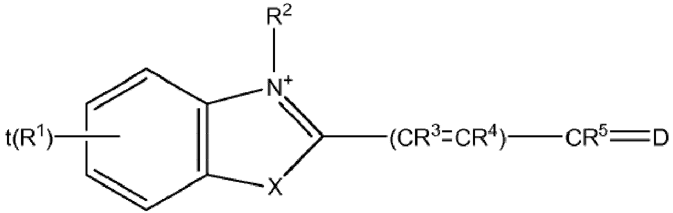 t einen Integer von 1 bis 4 darstellt;
wobei R² ein Alkyl darstellt;
X "S" darstellt;
jedes R¹ "H" darstellt;
R³ und R⁵ Wasserstoff darstellen;
R⁴ einen substituierten Phenlyanteil darstellt;
und
D einen substituierten Chinolinanteil darstellt.

2. Verbindung nach Anspruch 1, wobei die Verbindung bei nichtkovalenter Assoziation mit einer Nukleinsäure eine Fluoreszenzverstärkung zeigt.

3. Verbindung nach Anspruch 2, wobei die Fluoreszenzverstärkung höher ist, wenn es sich bei der Nukleinsäure um RNA handelt, als wenn es sich bei der Nukleinsäure um DNA handelt.

4. Verbindung nach einem der vorstehenden Ansprüche, wobei der substituierte Phenlyanteil R⁴ durch ein oder mehrere Elemente aus der Gruppe bestehend aus F, Cl, CF₃, -CO₂CH₃, Amino, C₁-C₆ Alkoxy, und C₁-C₆ Alkyl substituiert wird, das seinerseits optional weiter durch Amino, Sulfo, oder Carboxy substituiert wird.

5. Verbindung nach Anspruch 1 mit einer Formel, die aus den folgenden ausgewählt ist:

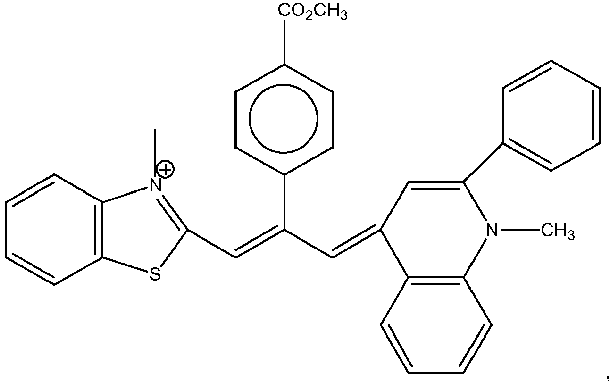

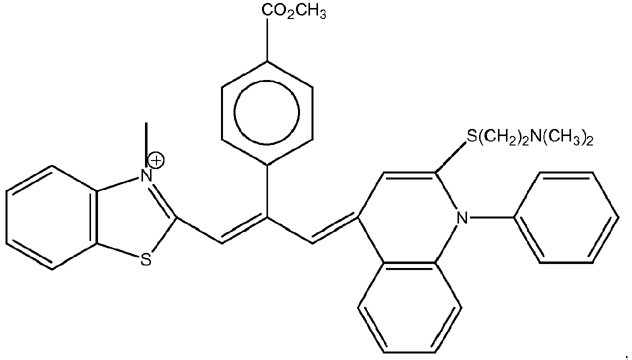

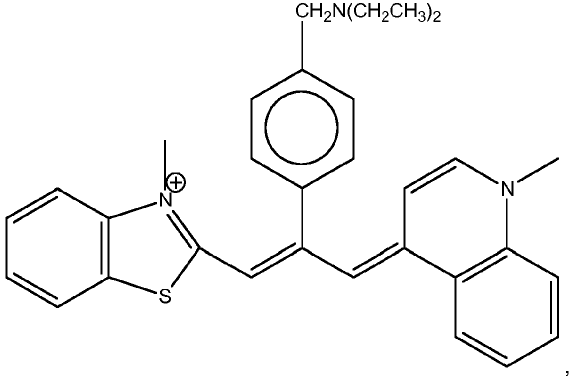

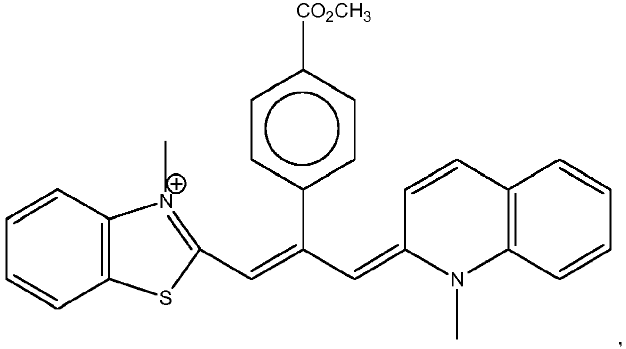

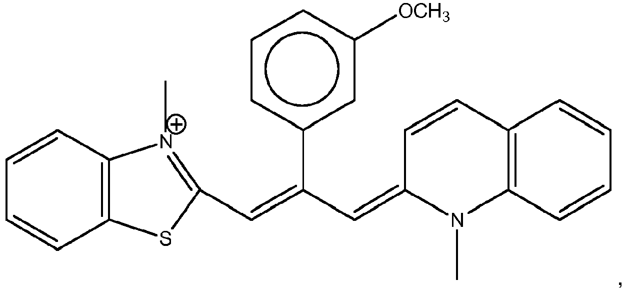

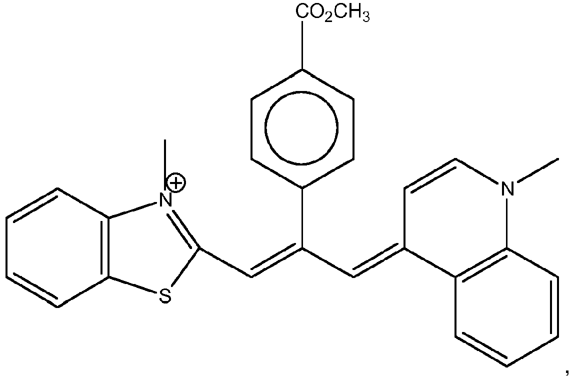

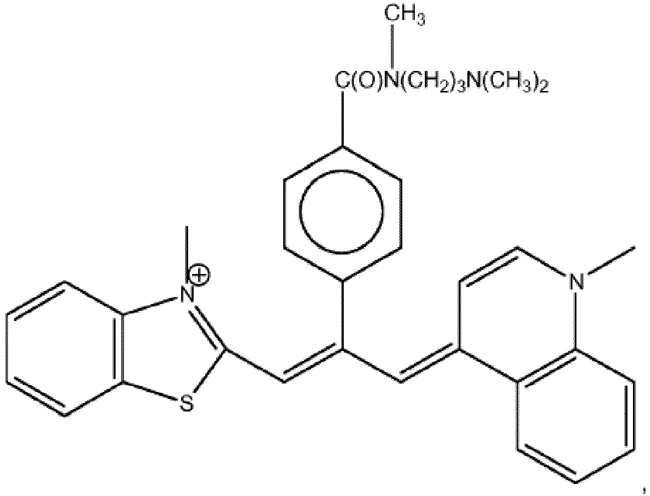

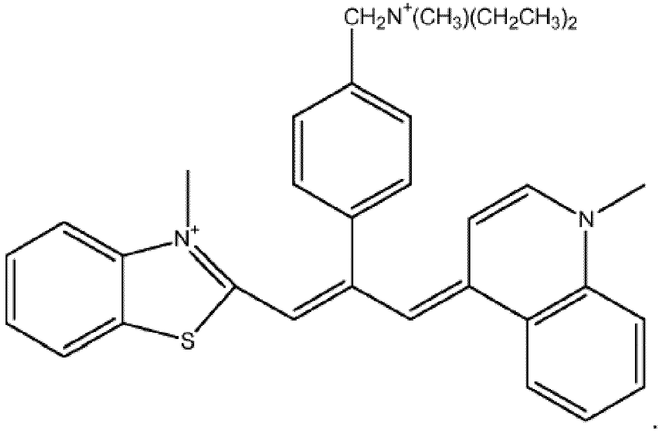

6. Verbindung nach Anspruch 1 mit der folgenden Formel:

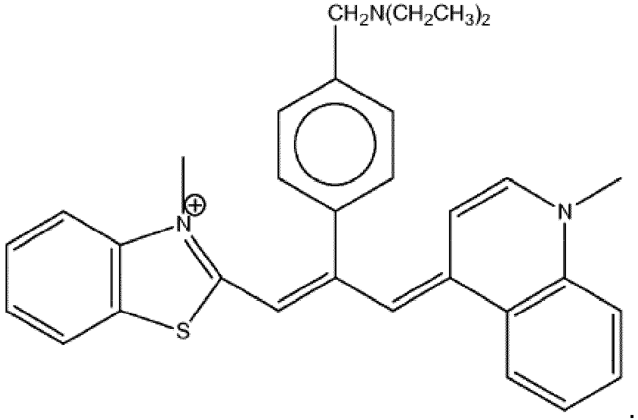

7. Verbindung bestehend aus einem Nukleinsäure-Reportermolekül eines beliebigen vorhergehenden Anspruchs und einer Probe.

8. Verbindung nach Anspruch 7, wobei die Probe biologische Medien, Pufferlösungen, Frischzellen, fixierte Zellen, eukaryotische Zellen, prokaryotische Zellen, Nukleinsäurepolymer, Nukleoside, Nucleotide, ein polymeres Gel oder Gewebeschnitte enthalten kann.

9. Verbindung nach Anspruch 8, wobei es sich beim Nukleinsäurepolymer um Einzelstrang-RNA, Doppelstrang-RNA, Einzelstrang-DNA oder Doppelstrang-DNA handelt.

10. Komplex, bestehend aus einem Nukleinsäure-Reportermolekül aus einem der Ansprüche 1 bis 6, das mit einem Nukleinsäuremolekül nichtkovalent assoziiert ist.

11. Komplex nach Anspruch 10, wobei es sich beim Nukleinsäuremolekül um Einzelstrang-RNA, Doppelstrang-RNA, Einzelstrang-DNA oder Doppelstrang-DNA handelt.

12. Komplex nach einem der Ansprüche 10 oder 11, wobei die Nukleinsäure mRNA, tRNA oder rRNA umfasst.

13. Komplex nach einem der Ansprüche 10 bis 12, wobei der Komplex in einer biologischen Probe oder in einer wässerigen oder mit Wasser mischbaren Lösung vorliegt.

14. Komplex nach einem der Ansprüche 10 bis 12, wobei der Komplex in einer elektrophoretischen Matrix oder in einem Polymergel vorliegt.

15. Verfahren zum Nachweisen der Gegenwart oder Abwesenheit von Nukleinsäure in einer Probe, wobei das Verfahren optional eine Quantifizierung der Nukleinsäure umfasst, wobei das Verfahren Folgendes umfasst:
a) Kombinieren eines Nukleinsäure-Reportermoleküls aus einem der Ansprüche 1 bis 6 mit der Probe, um ein Markierungsgemisch herzustellen;
b) Inkubieren des Markierungsgemischs über einen Zeitraum, der ausreichend ist, damit das Nukleinsäure-Reportermolekül mit der Nukleinsäure in der Probe assoziiert wird, um ein inkubiertes Gemisch zu bilden;
c) Beleuchten des inkubierten Gemischs mit einer geeigneten Wellenlänge, um ein beleuchtetes Gemisch zu bilden; und
d) Beobachten des erleuchteten Gemischs, wobei die Gegenwart oder Abwesenheit der Nukleinsäure in der Probe nachgewiesen wird.

16. Verfahren nach Anspruch 15, wobei es sich bei der Nukleinsäure um RNA handelt.

17. Verfahren nach Anspruch 15, wobei die Nukleinsäure mRNA, tRNA oder rRNA umfasst.

18. Verfahren zum Nachweis oder zur Quantifizierung von RNA in Gegenwart von DNA, wobei das Verfahren die folgenden Schritte umfasst:
a) Kombinieren eines Nukleinsäure-Reportermoleküls aus einem der Ansprüche 1 bis 6 mit einer Probe zur Herstellung eines Markierungsgemischs, wobei das Nukleinsäure-Reportermolekül ein RNA/DNA-Verhältnis der Fluoreszenzverstärkung größer als eins (1) aufweist;
b) Inkubieren des Markierungsgemischs über einen Zeitraum, der ausreichend ist, damit das Nukleinsäure-Reportermolekül mit der RNA in der Probe assoziiert wird, um ein inkubiertes Gemisch zu bilden;
c) Beleuchten des inkubierten Gemischs mit einer geeigneten Wellenlänge, um ein beleuchtetes Gemisch zu bilden; und
d) Beobachten des beleuchteten Gemischs, wobei die RNA in Gegenwart von DNA nachgewiesen wird.

19. Verfahren nach Anspruch 18, wobei die Fluoreszenz des Nukleinsäure-Reportermoleküls bei nichtkovalenter Assoziation mit RNA von der Fluoreszenz des Nukleinsäure-Reportermoleküls bei nichtkovalenter Assoziation mit DNA unterschieden werden kann.

20. Verfahren nach Anspruch 18 oder 19, wobei die RNA die Substanzen mRNA, tRNA oder rRNA umfasst.

21. Set zum Nachweis von Nukleinsäure in einer Probe, wobei das Set ein Nukleinsäure-Reportermolekül aus einem der Ansprüche 1 bis 6 umfasst.

22. Set nach Anspruch 21, das ferner ein oder mehrere Reagenzien zur Probenherstellung, eine Puffersubstanz, einen wässerigen Verdünnungspuffer für das Nukleinsäure-Reportermolekül, ein organisches Lösemittel, eine Kontrolle für Nukleinsäure, oder ein zusätzliches Nachweisreagens umfasst.

23. Set nach Anspruch 22, wobei der Verdünnungspuffer für das Nukleinsäure-Reportermolekül ein Detergens umfasst.

24. Set nach Anspruch 23, wobei das Detergens in einer endgültigen Konzentration von ca. 0,0001% bis ca. 0,005% (Gew./Vol.) vorliegt.

25. Set nach Anspruch 23 oder 24, wobei es sich beim Detergens um CHAPS (3-[(3-Cholamidopropyl)Dimethylammonio]-1-Propansulfonat), Tween®20, Triton™-X oder SDS (Natriumdodecylsulfat) handelt.

26. Set nach einem der Ansprüche 23 bis 25, wobei der Verdünnungspuffer für das Nukleinsäure-Reportermolekül schwach konzentrierte DNA enthält.

27. Färbelösung, umfassend ein Nukleinsäure-Reportermolekül aus einem der Ansprüche 1 bis 6, und ein Detergens.

28. Färbelösung nach Anspruch 27, wobei das Detergens in einer Konzentration von ca. 0,0001% bis ca. 0,005% vorliegt.

29. Färbelösung nach Anspruch 27 oder 28, wobei es sich beim Detergens um CHAPS (3-[(3-Cholamidopropyl)Dimethylammonio]-1-Propansulfonat), Triton™-X oder SDS (Natriumdodecylsulfat) oder Tween®20 handelt.

30. Färbelösung nach einem der Ansprüche 27 bis 29, die weiterhin schwach konzentrierte DNA enthält.

31. Färbelösung nach Anspruch 30, wobei die DNA in einer Konzentration von ca. 0,1 pg/ml bis ca. 0,5 pg/ml vorliegt.

32. Anwendung einer Verbindung nach einem der Ansprüche 1 bis 6 als Nukleinsäure-Reportermolekül.

33. Anwendung einer Verbindung nach einem der Ansprüche 1 bis 6 zum Nachweis von RNA.

34. Anwendung von Anspruch 33, wobei die RNA in Gegenwart von schwach konzentrierter DNA vorliegt.

## Revendications

1. Composé ayant la formule : 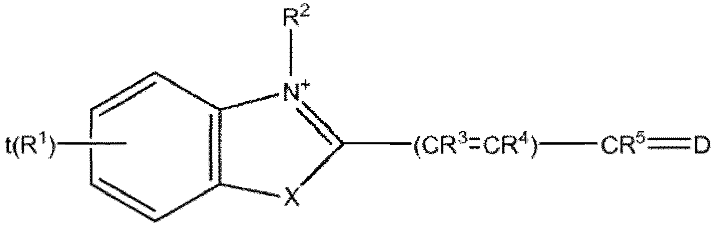 t est un nombre entier de 1 à 4 ;
dans lequel R² est un alkyle
X est S ;
chaque R¹ est H ;
R³ et R⁵ sont l'hydrogène ;
R⁴ est un groupement phényle substitué ; et
D est un groupement quinolinium substitué

2. Composé selon la revendication 1, dans lequel le composé présente uneamélioration de fluorescence lorsqu'il estassociéde manière non covalente à un acide nucléique.

3. Composé selon la revendication 2, dans lequel l'amélioration de fluorescence est plus importante lorsque l'acide nucléique est de l'ARN que lorsque l'acide nucléique est de l'ADN.

4. Composé selon l'une quelconque des revendications précédentes, dans lequel le groupement phényle substitué R⁴ est substitué par un ou plusieurs parmi F, Cl, CF₃, -CO₂CH₃, amino, alcoxy en C₁ à C₆, et alkyle en C₁ à C₆ qui est lui-même éventuellement encore substitué par amino, sulfo ou carboxy.

5. Composé selon la revendication 1, ayant une formule choisie parmi :

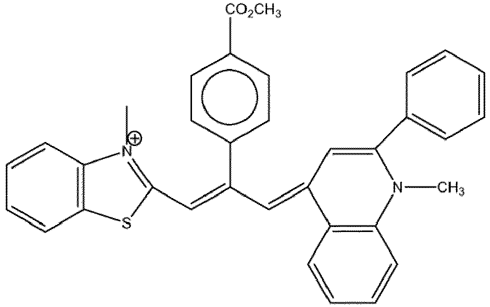

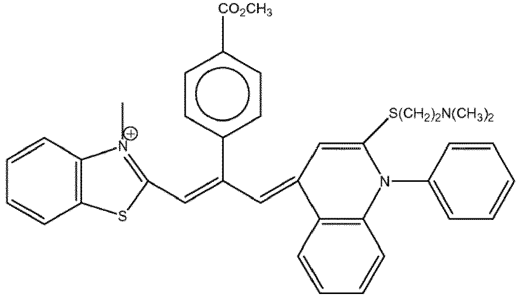

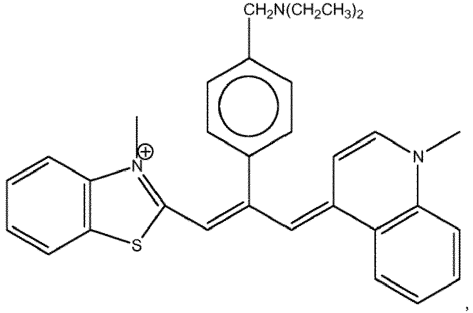

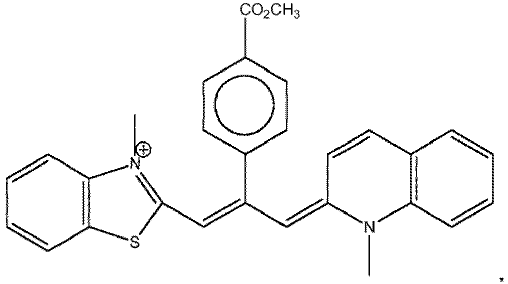

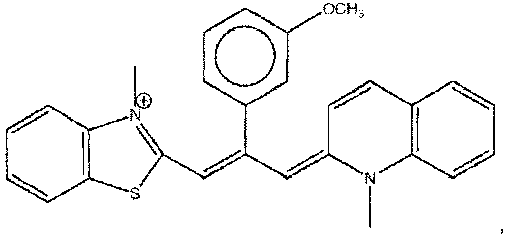

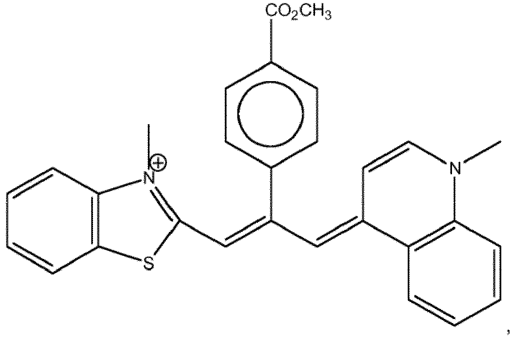

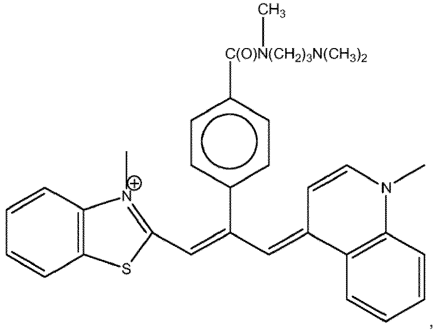

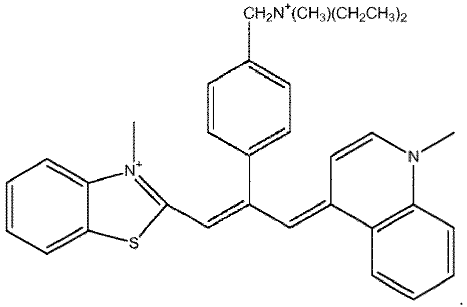

6. Composé selon la revendication 1, ayant la formule

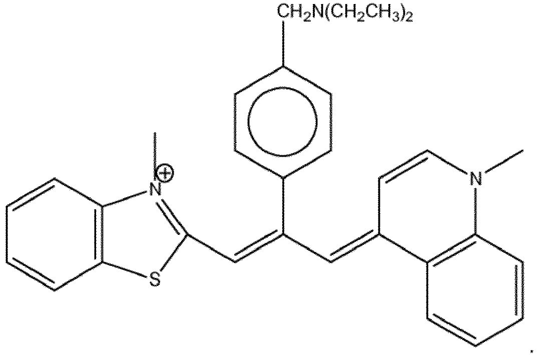

7. Composition comprenant une molécule reporteur d'acide nucléique selon l'une quelconque des revendications précédentes et un échantillon.

8. Composition selon la revendication 7, dans laquelle l'échantillon comprend des fluides biologiques, des solutions tampons, des cellules vivantes, des cellules fixées, des cellules eucaryotes, des cellules procaryotes, un polymère d'acide nucléique, des nucléosides, des nucléotides, un gel polymère ou des coupes de tissus.

9. Composition selon la revendication 8, dans laquelle le polymère d'acide nucléique est de l'ARN simple brin, de l'ARN double brin, de l'ADN simple brin ou de l'ADN double brin.

10. Complexe comprenant une molécule reporter d'acide nucléique selon l'une quelconque des revendications 1 à 6 associée de manière non covalente à une molécule d'acide nucléique.

11. Complexe selon la revendication 10, dans lequel la molécule d'acide nucléique est de l'ARN simple brin, de l'ARN double brin, de l'ADN simple brin ou de l'ADN double brin.

12. Complexe selon la revendication 10 ou la revendication 11, dans lequel l'acide nucléique comprend de l'ARNm, de l'ARNt ou de l'ARNr.

13. Complexe selon l'une quelconque des revendications 10 à 12, dans lequel le complexe est présent dans un échantillon biologique ou dans une solution aqueuse ou miscible aqueuse.

14. Complexe selon l'une quelconque des revendications 10 à 12, dans lequel le complexe est présent dans une matrice polymère ou un gel électrophorétique.

15. Procédé de détection de la présence ou de l'absence d'acide nucléique dans un échantillon, ledit procédé comprenant éventuellement la quantification de l'acide nucléique, le procédé comprenant les étapes consistant à :
a) combiner une molécule reporter d'acide nucléique selon l'une quelconque des revendications 1 à 6 à l'échantillon pour préparer un mélange de marquage ;
b) incuber le mélange de marquage pendant une durée suffisante pour que la molécule reporteur d'acide nucléique s'associeà l'acide nucléique dans l'échantillon pour former un mélange incubé ;
c) irradier le mélange incubé avec une longueur d'onde appropriée pour former un mélange irradié ; et,
d) observer le mélange irradié pour détecter la présence ou l'absence de l'acide nucléique dans l'échantillon.

16. Procédé selon la revendication 15, dans lequel l'acide nucléique est de l'ARN.

17. Procédé selon la revendication 15, dans lequel l'acide nucléique comprend de l'ARNm, de l'ARNt, ou de l'ARNr.

18. Procédé de détection ou de quantification d'ARN en présence d'ADN, le procédé comprenant les étapes consistant à :
a) combiner une molécule reporter d'acide nucléique selon l'une quelconque des revendications 1 à 6 à un échantillon pour préparer un mélange de marquage, la molécule reporter d'acide nucléique ayant un rapport ARN/ADN d'amélioration de fluorescence supérieur à environ un ;
b) incuber le mélange de marquage pendant une durée suffisante pour que la molécule reporter d'acide nucléique s'associe à l'ARN dans l'échantillon pour former un mélange incubé ;
c) irradier le mélange incubé avec une longueur d'onde appropriée pour former un mélange irradié ; et,
d) observer le mélange irradié pour détecter l'ARN en présence d'ADN.

19. Procédé selon la revendication 18, dans lequel la fluorescence de la molécule reporteur d'acide nucléique, lorsqu'elle est associéde façon non-covalente à l'ARN, peut être distinguée de la fluorescence de la molécule reporteur d'acide nucléique lorsqu'elle est associéede façon non covalente à l'ADN.

20. Procédé selon la revendication 18 ou la revendication 19, dans lequel l'ARN comprend de l'ARNm, de l'ARNt, ou de l'ARNr.

21. Kit de détection d'un acide nucléique dans un échantillon, le kit comprenant une molécule reporter d'acide nucléique selon l'une quelconque des revendications 1 à 6.

22. Kit selon la revendication 21, comprenant en outre un ou plusieurs parmi un réactif de préparation d'échantillon, un agent tampon, un tampon de dilution aqueuse de molécule reporteur d'acidenucléique, un solvant organique, un témoin d'acide nucléique, ou un réactif de détection supplémentaire.

23. Kit selon la revendication 22, dans lequel le tampon de dilution de molécule reporteur d'acide nucléique contient un détergent.

24. Kit selon la revendication 23, dans lequel le détergent est présent à une concentration finale d'environ 0,0001% à environ 0,005% (p/v).

25. Kit selon la revendication 23 ou la revendication 24, dans lequel le détergent est le CHAPS (sulfonate de 3-[(3-cholamidopropyl)diméthylammonio]-1 propane), le Tween®20, le Triton™-X ou SDS (dodécylsulfate de sodium).

26. Kit selon l'une quelconque des revendications 23 à 25, dans lequel le tampon de dilution de reporter d'acide nucléique contient une faible concentration d'ADN.

27. Solution de coloration comprenant une molécule reporteur d'acide nucléique selon l'une quelconque des revendications 1 à 6 et un détergent.

28. Solution de coloration selon la revendication 27, dans laquelle le détergent est présent à une concentration d'environ 0,0001% à environ 0,005%.

29. Solution de coloration selon la revendication 27 ou la revendication 28, dans laquelle le détergent est le CHAPS (sulfonate de 3-[(3-cholamidopropyl)diméthylammoniol-1-propane), le Triton™-X, le SDS (dodécylsulfate de sodium) ou le Tween®20.

30. Solution de coloration selon l'une quelconque des revendications 27 à 29, comprenant en outre une faible concentration d'ADN.

31. Solution de coloration selon la revendication 30, dans laquelle l'ADN est présent à une concentration d'environ 0,1 µg/ml à environ 0,5 µg/ml.

32. Utilisation d'un composé selon l'une quelconque des revendications 1 à 6 comme molécule reporter d'acide nucléique.

33. Utilisation d'un composé selon l'une quelconque des revendications 1 à 6 pour détecter de l'ARN.

34. Utilisation selon la revendication 33, dans laquelle l'ARN est en présence d'une faible concentration d'ADN.
